(19) Europäisches Patentamt
European Patent Office
Office européen des brevets

(11) EP 3 174 914 B1

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(21) Anmeldenummer: **15750652.8**

(22) Anmeldetag: **28.07.2015**

(51) Int Cl.:
***C08G 59/40*** (2006.01) ***C08G 59/68*** (2006.01)
***C08L 63/00*** (2006.01) ***F16L 55/16*** (2006.01)

(86) Internationale Anmeldenummer:
**PCT/EP2015/067284**

(87) Internationale Veröffentlichungsnummer:
**WO 2016/016248 (04.02.2016 Gazette 2016/05)**

(54) **TRÄNKHARZ ZUR KANALSANIERUNG**

IMPREGNATING RESIN FOR SEWER REHABILITATION

RÉSINE D'IMPRÉGNATION POUR LA RÉHABILITATION DE CANALISATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2014 DE 102014011619**

(43) Veröffentlichungstag der Anmeldung:
**07.06.2017 Patentblatt 2017/23**

(73) Patentinhaber: **AlzChem Trostberg GmbH**
**83308 Trostberg (DE)**

(72) Erfinder:
- **GRUBER, Ansgar**
**83308 Trostberg (DE)**
- **SAX, Monika**
**84519 Engelsberg (DE)**
- **EBNER, Martin**
**86438 Kissing (DE)**
- **KRIMMER, Hans-Peter**
**84558 Kirchweidach (DE)**

(74) Vertreter: **Weickmann & Weickmann PartmbB**
**Postfach 860 820**
**81635 München (DE)**

(56) Entgegenhaltungen:
- **DATABASE WPI Week 200967 Thomson Scientific, London, GB; AN 2009-P26421 XP002745032, & JP 2009 220328 A (NIPPON PAINT CO LTD) 1. Oktober 2009 (2009-10-01)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 174 914 B1

Printed by Jouve, 75001 PARIS (FR)

## Beschreibung

Die vorliegende Erfindung betrifft ein Tränkharz auf Basis von härtbaren Epoxidharzen zur Imprägnierung von Reparatur- und/oder Auskleidungsschläuchen für wasserführende Zu- und Ablaufkanäle sowie einen Reparatur- und/oder Auskleidungsschlauch mit diesem Tränkharz.

Reparatur- und Auskleidungsschläuche für fluidführende, insbesondere wasserführende Zu- und Ablaufkanäle, im Folgenden auch als Kanalsanierungssysteme bezeichnet, sind seit geraumer Zeit bekannt. Mit Hilfe dieser Reparatur- und Auskleidungsschläuche können insbesondere wasserführende Zu- und Ablaufkanäle, die unterirdisch verlaufen, zeitsparend ohne aufwendige Erdarbeiten repariert werden. Hierzu wird der Reparatur- oder Auskleidungsschlauch in den Zu- oder Ablaufkanal eingezogen, mittels adhäsiver Kräfte als sogenannte zweite Wand an der Innenwand des Zu- oder Ablaufkanal befestigt und letztendlich ausgehärtet. Somit entsteht ein Rohr-im-Rohr-System, das undichte Stellen oder Risse des zu reparierenden Kanals abdichtet.

Kanalsanierungssysteme dieser Art werden heute bereits angewendet und sind vielfach beschrieben. Nicht abschließend sollen hier die folgenden Patente oder Patentanmeldungen EP 1087865 B1, WO 03/15131 A1, WO 2006/061129 A1 genannt sein.

Diese beschriebenen Kanalsanierungssysteme bestehen aus einem Trägermaterial und einem auf das Trägermaterial aufgebrachten oder imprägnierten Tränkharz. Das Trägermaterial kann aus den verschiedensten Grundmaterialien, wie beispielsweise Fasermaterial aus Glasfasern, Polyesterfasern, Kohlefasern oder auch Naturfasern, wie Baumwolle, bestehen. Als Tränkharz werden härtbare Polymerharze und Zusammensetzungen auf Basis dieser Polymerharze verwendet, die mittels eines Härtungssystems unter Zuhilfenahme von Wärme oder Strahlung, wie beispielsweise UV-Strahlung, härten. Als härtbare Polymerharze werden vorzugsweise ungesättigte Polyesterharze oder Vinylesterharze verwendet, die je nach Anforderung, beispielsweise bedingt durch das Trägermaterial, mit geeigneten Zusatzstoffen versetzt sein können. Ein Merkmal dieser Polymerharze ist, dass diese Polymerharze unter großer Hitzeentwicklung aushärten und bei der Aushärtung meist einem Schwund unterliegen. Hierdurch bedingt können ein zu geringer Innendurchmesser in dem zu reparierenden Leitungssystem erzeugt werden oder andere im späteren Betrieb nachteilige Beeinträchtigungen resultieren. Beispielsweise können Hohlräume zwischen dem ausgehärteten Reparaturschlauch und der Innenwand des zu reparierenden Kanals entstehen. Diese Hohlräume können in der bestimmungsgemäßen Verwendung des Kanals Grund für erneute Schäden sein.

Die Verwendung von härtbaren Epoxidharzen ist aufgrund ihrer guten Chemikalienbeständigkeit, ihrer sehr guten thermischen und dynamischmechanischen Eigenschaften sowie ihres hohen elektrischen Isolationsvermögens weit verbreitet. Darüber hinaus zeigen härtbare Epoxidharze eine gute Haftung auf vielen Substraten und sind somit bestens für den Einsatz in Faserverbundwerkstoffen (Composites) geeignet. Des Weiteren sind auch Tränkharze auf Basis von härtbaren Epoxidharzen für Kanalsanierungssysteme bekannt. So wird beispielsweise mit der US-amerikanischen Patentschrift US 5,017,258 A ein Auskleidungsschlauch beschrieben, der ein Tränkharz auf Basis von Epoxidharzen umfasst. Das Tränkharz seinerseits wird mittels eines Härters aus der Gruppe der Imidazole gehärtet. Diese Härter weisen analog zu den bekannten Aminhärtern nur eine geringe bis sehr geringe Latenz auf.

Darüber hinaus werden mit den internationalen Patentanmeldungen WO 2013/124244 A1 oder WO 2013/037670 A1 Tränkharze für Kanalsanierungssysteme beschrieben, die ein härtbares Epoxidharz und einen Härter umfassen. Diese Härter liegen in dem Harz isoliert vor bzw. sind mit einer Die Härtung von Epoxidharzen verläuft nach unterschiedlichen Mechanismen. Neben der Härtung mit Phenolen oder Anhydriden wird häufig die Härtung mit Aminen durchgeführt. Diese Stoffe sind meist flüssig und lassen sich sehr gut mit Epoxidharzen vermengen. Aufgrund der hohen Reaktivität und damit sehr niedrigen Latenz werden derartige Epoxidharz-Zusammensetzungen zweikomponentig ausgeführt. Dies bedeutet, dass das Harz (A-Komponente) und der Härter (B-Komponente) getrennt aufbewahrt werden und erst kurz vor Gebrauch im korrekten Verhältnis gemischt werden. Diese zweikomponentigen Harzformulierungen werden auch als sogenannte kalthärtende Harzformulierungen bezeichnet, wobei die dafür verwendeten Härter meist aus der Gruppe der Amine oder Amidoamine gewählt werden.

Einkomponentige, heißhärtende Epoxidharzformulierungen sind hingegen gebrauchsfähig fertig vorkonfektioniert, das heißt, dass das Epoxidharz und der Härter werkseitig vermischt vorliegen. Mischungsfehler der Einzelkomponenten bei Gebrauch vor Ort sind daher ausgeschlossen. Voraussetzung dafür bilden latente Härtersysteme, welche bei Raumtemperatur mit dem Epoxidharz kaum reagieren (lagerfähig sind), jedoch unter Erwärmung je nach Energieeintrag bereitwillig ausreagieren. Für solche einkomponentigen Epoxidharz-Formulierungen ist beispielsweise Dicyandiamid ein besonders geeigneter und auch kostengünstiger Härter. Unter Umgebungsbedingungen können entsprechende Harz-Härter-Mischungen bis zu zwölf (12) Monaten gebrauchsfähig gelagert werden.

Aufgabe der vorliegenden Erfindung ist es somit ein Tränkharz zur Verfügung zu stellen, das werkseitig leicht anwendbar und anwendungssicher ist und zur Imprägnierung von Reparatur- und/oder Auskleidungsschläuchen für wasserführende Zu- und Ablaufkanäle einsetzbar ist. Weiterhin soll ein Tränkharz zur Verfügung gestellt werden, das allein durch Wärmeübertragung und somit ohne Zuhilfenahme von Strahlung, wie beispielsweise UV-Strahlung, härtbar ist. Dabei soll das Tränkharz auf dem Reparatur- und/oder Auskleidungsschlauch eine ausreichende Reaktivität und

zugleich eine besonders gute Lagerfähigkeit aufweisen, so dass ein mit dem Tränkharz imprägnierter, vorkonfektionierter Reparatur- und/oder Auskleidungsschlauch nicht vor seinem Einbau in den zu reparierenden Kanal aushärtet, jedoch beim Einbau unter definierten Bedingungen zügig aushärtet. Zudem ist es eine Aufgabe der vorliegenden Erfindung, ein Tränkharz zur Verfügung zu stellen, das im ausgehärteten Zustand, insbesondere als Bestandteil eines Reparatur- und/oder Auskleidungsschlauches, eine hohe Abriebfestigkeit sowie eine hohe Druckfestigkeit aufweist. Weiterhin soll ein Reparatur- und/oder Auskleidungsschlauch zur Verfügung gestellt werden, der den Anforderungen der Wasserwirtschaft genügt.

Erfindungsgemäß werden diese Aufgaben durch ein Tränkharz gemäß Anspruch 1 und einen Reparatur- und/oder Auskleidungsschlauch gemäß Anspruch 14 gelöst.

Damit ist ein Tränkharz auf Basis von härtbaren Epoxidharzen zur Imprägnierung von Reparatur- und/oder Auskleidungsschläuchen für wasserführende Zu- und Ablaufkanäle Gegenstand der vorliegenden Erfindung, das

a) ein Epoxidharzgemisch umfassend ein erstes härtbares Epoxidharz E1 und mindestens ein weiteres, von dem ersten Epoxidharz E1 verschiedenes härtbares Epoxidharz E2, und
b) ein latentes Härtungssystem umfassend mindestens einen Härter H zur Härtung der Epoxidharze und mindestens einen Härtungsbeschleuniger B, zur Beschleunigung der Härtung mittels des Härters H, umfasst,

wobei das Tränkharz vor der Härtung einen Ø $EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist.

Hierbei können die Epoxidharze E1 und E2 derart gewählt und/oder gemischt werden, dass das Tränkharz vor der Härtung einen Ø $EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist.

Insbesondere weist das Tränkharz der vorliegenden Erfindung zudem eine Viskosität im Bereich von >0,5 bis 45 Pa*s, insbesondere eine Viskosität von >0,5 bis 30 Pa*s, insbesondere eine Viskosität von >0,5 bis 15 Pa*s, insbesondere eine Viskosität von >0,5 bis 10 Pa*s, insbesondere eine Viskosität von >0,5 bis 5 Pa*s, insbesondere eine Viskosität von 1 bis 30 Pa*s, insbesondere eine Viskosität von 1 bis 15 Pa*s, insbesondere eine Viskosität von 1 bis 10 Pa*s, insbesondere eine Viskosität von 1 bis 5 Pa*s, bei 60 °C auf.

Damit ist auch ein Tränkharz auf Basis von härtbaren Epoxidharzen zur Imprägnierung von Reparatur- und/oder Auskleidungsschläuchen für wasserführende Zu- und Ablaufkanäle Gegenstand der vorliegenden Erfindung, das

a) ein Epoxidharzgemisch umfassend ein erstes härtbares Epoxidharz E1 und mindestens ein weiteres, von dem ersten Epoxidharz E1 verschiedenes härtbares Epoxidharz E2, und
b) ein latentes Härtungssystem umfassend mindestens einen Härter H zur Härtung der Epoxidharze und mindestens einen Härtungsbeschleuniger B, zur Beschleunigung der Härtung mittels des Härters H, umfasst,

wobei das Tränkharz vor der Härtung einen Ø $EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C und eine Viskosität im Bereich von > 0,5 bis 45 Pa*s, insbesondere eine Viskosität von > 0,5 bis 30 Pa*s, insbesondere eine Viskosität von >0,5 bis 15 Pa*s, insbesondere eine Viskosität von >0,5 bis 10 Pa*s, insbesondere eine Viskosität von >0,5 bis 5 Pa*s, insbesondere eine Viskosität von 1 bis 30 Pa*s, insbesondere eine Viskosität von 1 bis 15 Pa*s, insbesondere eine Viskosität von 1 bis 10 Pa*s, insbesondere eine Viskosität von 1 bis 5 Pa*s, bei 60 °C aufweist.

Hierbei können die Epoxidharze E1 und E2 derart gewählt und/oder gemischt werden, dass das Tränkharz vor der Härtung einen Ø $EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C, und eine Viskosität im Bereich von > 0,5 bis 45 Pa*s, insbesondere eine Viskosität von > 0,5 bis 30 Pa*s, insbesondere eine Viskosität von >0,5 bis 15 Pa*s, insbesondere eine Viskosität von >0,5 bis 10 Pa*s, insbesondere eine Viskosität von >0,5 bis 5 Pa*s, insbesondere eine Viskosität von 1 bis 30 Pa*s, insbesondere eine Viskosität von 1 bis 15 Pa*s, insbesondere eine Viskosität von 1 bis 10 Pa*s, insbesondere eine Viskosität von 1 bis 5 Pa*s, bei 60 °C aufweist.

Des Weiteren ist damit auch ein Reparatur- und/oder Auskleidungsschlauch für wasserführende Zu- und Ablaufkanäle Gegenstand der vorliegenden Erfindung, der ein Trägermaterial und ein solches Tränkharz umfasst.

Gemäß einer Weiterbildung der Erfindung kann das Tränkharz ein Epoxidharzgemisch umfassen, das seinerseits ein erstes Epoxidharz E1 mit einem Ø $EEW_i$ von < 200 g/Val insbesondere mit einem Ø $EEW_i$ von 50 bis < 200 g/Val, und mindestens ein weiteres, von dem ersten Epoxidharz E1 verschiedenes Epoxidharz E2 mit einem Ø $EEW_i$ von < 400 g/Val, insbesondere mit einem Ø $EEW_i$ von 50 bis < 400 g/Val und ganz besonders mit einem Ø $EEW_i$ von

150 bis < 400 g/Val und ganz besonders bevorzugt mit einem Ø $EEW_i$ von 200 bis < 400 g/Val, umfasst. Es kann jedoch auch vorgesehen sein, dass das Epoxidharzgemisch ein erstes Epoxidharz E1 mit einem Ø $EEW_i$ von < 200 g/Val, insbesondere mit einem Ø $EEW_i$ von 50 bis < 200 g/Val, und mindestens ein weiteres, von dem ersten Epoxidharz E1 verschiedenes Epoxidharz E2 mit einem Ø $EEW_i$ von 150 bis < 400 g/Val und ganz besonders bevorzugt mit einem Ø $EEW_i$ von 150 bis < 300 g/Val umfasst. Besonders bevorzugt werden hierbei die Epoxidharze E1 und E2 derart gewählt und/oder gemischt, dass das Tränkharz vor der Härtung einen Ø $EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist. Ganz besonders bevorzugt werden hierbei die Epoxidharze E1 und E2 derart gewählt und/oder gemischt, dass das Tränkharz vor der Härtung einen Ø $EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist und eine Viskosität im Bereich von >0,5 bis 45 Pa*s, insbesondere eine Viskosität von >0,5 bis 30 Pa*s, insbesondere eine Viskosität von >0,5 bis 15 Pa*s, insbesondere eine Viskosität von >0,5 bis 10 Pa*s, insbesondere eine Viskosität von >0,5 bis 5 Pa*s, insbesondere eine Viskosität von 1 bis 30 Pa*s, insbesondere eine Viskosität von 1 bis 15 Pa*s, insbesondere eine Viskosität von 1 bis 10 Pa*s, insbesondere eine Viskosität von 1 bis 5 Pa*s, bei 60 °C aufweist.

Im Sinne der vorliegenden Erfindung beinhaltet oder umfasst der Term "auf Basis von härtbaren Epoxidharzen" insbesondere, dass als Ausgangskomponenten - insbesondere Hauptkomponenten - Epoxidharze verwendet werden, die wärmehärtbar, d.h. auf Grund ihrer funktionellen Gruppen, nämlich Epoxidgruppen, polymerisierbar, vernetzbar und/oder quervernetzbar und insbesondere durch Wärme polymerisierbar, vernetzbar und/oder quervernetzbar sind. Hierbei erfolgt eine Polymerisation, Vernetzung und/oder Quervernetzung als Folge einer Polyaddition, die durch das latente Härtungssystem induziert wird. Erfindungswesentlich kommen hierbei mindestens zwei verschiedene Epoxidharze E1 und E2 zum Einsatz. Diese zwei verschiedenen Epoxidharze E1 und E2 werden insbesondere derart gewählt und/oder abgemischt, dass das resultierende Tränkharz ein Epoxy-Equivalent-Gewicht Ø $EEW_{Mischung}$ von weniger als 200 g/Val und eine Viskosität von 5 bis 70 Pa*s, insbesondere eine Viskosität von 5 bis 30 Pa*s und ganz besonders bevorzugt eine Viskosität von 5 bis 15 Pa*s, bei 25 °C aufweist. Diese zwei verschiedenen Epoxidharze E1 und E2 werden zudem derart gewählt und/oder abgemischt, dass das resultierende Tränkharz ein Epoxy-Equivalent-Gewicht Ø $EEW_{Mischung}$ von weniger als 200 g/Val und eine Viskosität von 5 bis 70 Pa*s, insbesondere eine Viskosität von 5 bis 30 Pa*s und ganz besonders bevorzugt eine Viskosität von 5 bis 15 Pa*s, bei 25 °C aufweist und eine Viskosität im Bereich von >0,5 bis 45 Pa*s, insbesondere eine Viskosität von >0,5 bis 30 Pa*s, insbesondere eine Viskosität von >0,5 bis 15 Pa*s, insbesondere eine Viskosität von >0,5 bis 10 Pa*s, insbesondere eine Viskosität von >0,5 bis 5 Pa*s, insbesondere eine Viskosität von 1 bis 30 Pa*s, insbesondere eine Viskosität von 1 bis 15 Pa*s, insbesondere eine Viskosität von 1 bis 10 Pa*s, insbesondere eine Viskosität von 1 bis 5 Pa*s, bei 60 °C aufweist.

Des Weiteren bedeutet "latentes Härtungssystem" im Sinne der vorliegenden Erfindung, dass das Härtungssystem eine Härtung mittels Wärme initiieren, jedoch bei einer Temperatur von 23 °C über einen Zeitraum von mindestens 7 Tagen keine nennenswerte Polymerisation, Vernetzung oder Quervernetzung der Epoxidharze initiiert, so dass das Tränkharz unter definierten Lagerbedingungen (23 °C, 50 % relative Luftfeuchtigkeit) stabil vorliegt. Somit umfasst ein erfindungsgemäßes Tränkharz oder das Härtungssystem keine Härter oder Härtungsbeschleuniger, die eine Härtung mittels UV-Strahlung initiieren.

Die Epoxyäquivalentmasse eines Epoxidharzes oder einer Epoxid-Komponente (EEW, Epoxy Equivalent Weight - nachfolgend auch Äquivalentmasse) gemäß der vorliegenden Erfindung wird als Materialeigenschaft des jeweiligen Epoxidharzes bestimmt und gibt die Menge an Epoxidharz in [g] an, die ein Äquivalent [val] Epoxidfunktionen besitzt. Sie errechnet sich aus der Molmasse in [g/mol] dividiert durch die Funktionalität f in [Val/Mol]. Der EEW wird als Mittelwert Ø in [g/eq] oder in [g/Val] angegeben

$$Ø\ EEW\ [g/Val] = M\ [g/mol]\ /\ f\ [Val/Mol]$$

Bei Einsatz verschiedener reaktiver Komponenten zur Formulierung des Harzes errechnet sich die Äquivalentmasse einer Mischung aus i Epoxid-Komponenten bzw. des Tränkharzes umfassend i Epoxid-Komponenten (Ø $EEW_{Mischung}$ [g/Val]) folgendermaßen:

$$Ø\ EEW_{Mischung}\ [g/Val] = m_{ges} / (\Sigma m_i / Ø\ EEW_i)$$

$$m_{ges} = \Sigma m_i \text{ mit}$$

$m_i$ = Massen der einzelnen Komponenten der Mischung

$\varnothing\ EEW_i$ = Ø Epoxyäquivalentmasse der Komponente i.

Durch die Wahl eines latenten Härtungssystems umfassend mindestens einen Härter zur Härtung der Epoxidharze und mindestens einen Härtungsbeschleuniger, zur Beschleunigung der Härtung mittels des Härters, und die gezielte Auswahl der Epoxidharze bzw. des Epoxidharzgemisches, kann ein Tränkharz zur Verfügung gestellt werden, das werkseitig, insbesondere bei der Herstellung von mit Tränkharz versehenen Reparatur- oder/und Auskleidungsschläuchen, leicht anwendbar und anwendungssicher ist. Das somit bereitgestellte Tränkharz kann ohne jede weitere Vermischung mit einem weiteren Bestandteil auf einen Gewebeschlauch, Filzmatte oder ähnliches Trägermaterial aufgebracht werden. Insbesondere kann erfindungsgemäß auch ein Tränkharz zur Verfügung gestellt werden, das aufgetragen oder imprägniert auf einem Gewebeschlauch oder anderem Trägermaterial, im Vergleich zu Tränkharzen auf Basis von Polyesterharzen oder Vinylesterharzen einen geringeren Schwund aufweist. Insgesamt kann somit ein Trägerharz zur Verfügung gestellt werden, das aufgrund seiner spezifischen Eigenschaften, wie beispielsweise eine hohe Reaktivität bei der Härtungstemperatur, hervorragend für den Einsatz in Kanalsanierungssystemen geeignet ist.

Weiterhin überraschend wurde festgestellt, dass durch die Verwendung und das Abmischen von mindestens zwei verschiedenen Epoxidharzen ein Tränkharz zur Verfügung gestellt werden kann, das über eine hohe Abriebfestigkeit und eine hohe Dauerfestigkeit im gehärteten Zustand verfügt und zudem die Anforderungen der Abwasserwirtschaft erfüllt. Dabei hat sich zudem vollkommen überraschend gezeigt, dass das Tränkharz auf einem Trägermaterial (Auskleidungsschlauch) im Vergleich zu dem Tränkharz selbst, lagerstabiler ist. Dies war in keinster Weise vorhersehbar und kann nur mit der gezielten Auswahl der Epoxidharze und des Härtungssystem begründet werden.

Durch die gezielte Wahl und/oder das Abmischen der mindestens zwei verschiedenen Epoxidharze und der Einstellung der Viskosität bei 25 °C und der Viskosität bei 60 °C kann zudem gewährleistet werden, dass das Tränkharz nahe bei seiner Härtungstemperatur eine Viskosität aufweist, die einerseits ein gute bis sehr gute Imprägnierung des zu benetzenden oder zu imprägnierenden Trägermaterials ermöglicht. Andererseits wird somit auch gewährleistet, dass das Tränkharz nahe bei seiner Härtungstemperatur nicht zu dünnflüssig ist, so dass das Tränkharz von dem zu benetzenden oder zu imprägnierenden Trägermaterial abtropft, oder so dass eine ungleichmäßige Verteilung des Tränkharzes über den Querschnitt des Trägermaterials resultiert.

Gemäß einer besonderen Ausbildung der Erfindung kann dabei vorgesehen sein, dass das Tränkharz ein Epoxidharzgemisch umfasst, das seinerseits das erste Epoxidharz E1 und das weitere Epoxidharz E2 in einem Gewichtsverhältnis E1 : E2 umfasst, das einem Verhältnis im Bereich von 4,9 : 1 bis 1 : 4,9 entspricht. Besonders bevorzugt umfasst das Epoxidharzgemisch das erste Epoxidharz E1 und das weitere Epoxidharz E2 in einem Gewichtsverhältnis, das einem Verhältnis im Bereich von 4 : 1 bis 1 : 4 und ganz besonders bevorzugt einem Verhältnis im Bereich von 3 : 1 bis 1 : 3, entspricht. Alternativ kann jedoch auch vorgesehen sein, dass das Epoxidharzgemisch das erste Epoxidharz E1 und das weitere Epoxidharz E2 in einem Gewichtsverhältnis umfasst, das einem Verhältnis E1 : E2 im Bereich von 4,9 : 1 bis 1 : 1, besonders bevorzugt einem Verhältnis im Bereich von 4 : 1 bis 1 : 1 und ganz besonders bevorzugt einem Verhältnis im Bereich von 3 : 1 bis 1 : 1, entspricht. Wesentlich ist jedoch, dass bei der Einstellung des Gewichtsverhältnisses darauf geachtet wird, dass das resultierende Tränkharz vor der Härtung einen $\varnothing\ EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist. Dabei kann bei der Einstellung der Gewichtsverhältnisse auch vorgesehen sein, dass das resultierende Tränkharz vor der Härtung einen $\varnothing\ EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist und eine Viskosität im Bereich von > 0,5 bis 45 Pa*s, insbesondere eine Viskosität von > 0,5 bis 30 Pa*s, insbesondere eine Viskosität von >0,5 bis 15 Pa*s, insbesondere eine Viskosität von >0,5 bis 10 Pa*s, insbesondere eine Viskosität von >0,5 bis 5 Pa*s, insbesondere eine Viskosität von 1 bis 30 Pa*s, insbesondere eine Viskosität von 1 bis 15 Pa*s, insbesondere eine Viskosität von 1 bis 10 Pa*s, insbesondere eine Viskosität von 1 bis 5 Pa*s, bei 60 °C, somit nahe bei seiner Härtungstemperatur, aufweist.

Weiterhin kann in Weiterbildung der Erfindung vorgesehen sein, dass das erfindungsgemäße Tränkharz neben dem Epoxidharzgemisch ein drittes Epoxidharz E3 umfasst, oder dass das Epoxidharzgemisch neben dem ersten und dem weiteren Epoxidharz E1 und E2 ein drittes Epoxidharz E3 umfasst, das von dem ersten und dem weiteren Epoxidharz E1 und E2 verschieden ist. Insbesondere ist hierbei vorgesehen, dass diese Epoxidharze E1, E2 und E3 derart gewählt und/oder gemischt werden, dass das Tränkharz vor der Härtung einen $\varnothing\ EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist. Insbesondere ist hierbei auch vorgesehen, dass diese

Epoxidharze E1, E2 und E3 derart gewählt und/oder gemischt werden, dass das Tränkharz vor der Härtung einen Ø EEWMischung im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist und eine Viskosität im Bereich von >0,5 bis 45 Pa*s, insbesondere eine Viskosität von >0,5 bis 30 Pa*s, insbesondere eine Viskosität von >0,5 bis 15 Pa*s, insbesondere eine Viskosität von >0,5 bis 10 Pa*s, insbesondere eine Viskosität von >0,5 bis 5 Pa*s, insbesondere eine Viskosität von 1 bis 30 Pa*s, insbesondere eine Viskosität von 1 bis 15 Pa*s, insbesondere eine Viskosität von 1 bis 10 Pa*s, insbesondere eine Viskosität von 1 bis 5 Pa*s, bei 60 °C aufweist. Dabei umfasst das erfindungsgemäße Tränkharz oder das Epoxidharzgemisch weiterhin bevorzugt ein drittes Epoxidharz E3 mit einem Ø $EEW_i$ von < 400 g/Val, und besonders bevorzugt ein drittes Epoxidharz E3 mit einem Ø $EEW_i$ von 100 bis < 300 g/Val, ganz besonders bevorzugt ein drittes Epoxidharz E3 mit einem Ø $EEW_i$ von 100 bis < 200 g/Val. Es kann jedoch auch vorgesehen sein, dass das Epoxidharzgemisch weiterhin bevorzugt ein drittes Epoxidharz E3, insbesondere ein drittes Epoxidharz E3 mit einem Ø EEW von < 400 g/Val, insbesondere Ø EEW von 200 bis < 400 g/Val umfasst, das von dem ersten und dem weiteren Epoxidharz E1 und E2 verschieden ist, wobei das erste Epoxidharz E1 einen Ø $EEW_i$ von < 200 g/Val insbesondere mit einem Ø $EEW_i$ von 50 bis < 200 g/Val, und das weitere, von dem ersten Epoxidharz E1 verschiedenes Epoxidharz E2 einem Ø $EEW_i$ von 150 bis < 400 g/Val, insbesondere einen Ø $EEW_i$ von 200 bis < 400 g/Val aufweist.

Gemäß einer weiteren besonderen Ausbildung der Erfindung kann dabei auch vorgesehen sein, dass das Tränkharz ein Epoxidharzgemisch umfasst, das seinerseits das erste Epoxidharz E1, das weitere Epoxidharz E2 und ein drittes Epoxidharz E3 in einem Gewichtsverhältnis E3 : (E2 + E1) umfasst, das einem Verhältnis im Bereich von 1 : 5 bis 1 : 20 entspricht. Wesentlich ist jedoch auch hierbei, dass bei der Einstellung des Gewichtsverhältnisses darauf geachtet wird, dass das resultierende Tränkharz vor der Härtung einen Ø $EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist. Dabei kann bei der Einstellung der Gewichtsverhältnisse auch vorgesehen sein, dass das resultierende Tränkharz vor der Härtung einen Ø EEWMischung im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist und bei 60 °C, somit nahe bei seiner Härtungstemperatur, eine Viskosität im Bereich von >0,5 bis 45 Pa*s, insbesondere eine Viskosität von >0,5 bis 30 Pa*s, insbesondere eine Viskosität von >0,5 bis 15 Pa*s, insbesondere eine Viskosität von >0,5 bis 10 Pa*s, insbesondere eine Viskosität von >0,5 bis 5 Pa*s, insbesondere eine Viskosität von 1 bis 30 Pa*s, insbesondere eine Viskosität von 1 bis 15 Pa*s, insbesondere eine Viskosität von 1 bis 10 Pa*s, insbesondere eine Viskosität von 1 bis 5 Pa*s, aufweist.

Dabei können im Hinblick auf die härtbaren Epoxidharze jedwede Epoxidharze verwendet werden, die erfindungsgemäß geforderte Ø EEW-Werte aufweisen. Es kommen insbesondere sämtliche Epoxidharze in Frage, die mehr als eine Epoxidgruppe (Oxiran), insbesondere zwei oder mehr als zwei Epoxidgruppen, aufweisen und dabei gesättigt oder ungesättigt, aliphatisch, cycloaliphatisch, aromatisch oder heterozyklisch sein können. Außerdem können die Epoxidharze Substituenten wie Halogene, Phosphor- und Hydroxyl-Gruppen aufweisen. Hierbei sind Epoxidharze auf Basis von Glycidylpolyethern besonders geeignet. Ganz besonders geeignet sind Epoxidharze auf Basis von Glycidylpolyethern von 2,2-Bis(4-hydroxyphenyl)-propan (Bisphenol A) oder dessen Brom substituiertes Derivat (Tetrabrombisphenol A), auf Basis von Glycidylpolyethern von 2,2-Bis(4-hydroxyphenyl)methan (Bisphenol F) und auf Basis von Glycidylpolyether von Novolacken sowie auf Basis von Anilin oder substituierten Anilinen wie beispielsweise p-Aminophenol oder 4,4'-Diaminodiphenylmethane.

Damit umfasst ein bevorzugtes Tränkharz insbesondere ein Epoxidharzgemisch, das als härtbares Epoxidharz E1 und/ oder E2 mindestens ein Epoxidharz aus der Gruppe der Epoxidharze auf Basis Glycidylpolyether von 2,2-Bis(4-hydroxyphenyl)propan (Bisphenol A), dessen mit Brom substituiertes Derivat (Tetrabrombisphenol A), Glycidylpolyether von 2,2-Bis(4-hydroxyphenyl)-methan (Bisphenol F) und/oder Glycidylpolyether von Novolac-Harzen umfasst, wobei die härtbaren Epoxidharze E1 und/ oder E2 derart gewählt und/ oder gemischt werden, dass das resultierende Tränkharz vor der Härtung einen Ø $EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist. Insbesondere werden hierbei die härtbaren Epoxidharze E1 und/ oder E2 derart gewählt und/ oder gemischt werden, dass das resultierende Tränkharz vor der Härtung einen Ø $EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist, und bei 60 °C, somit nahe bei seiner Härtungstemperatur, eine Viskosität im Bereich von > 0,5 bis 45 Pa*s, insbesondere eine Viskosität von > 0,5 bis 30 Pa*s, insbesondere eine Viskosität von >0,5 bis 15 Pa*s, insbesondere eine Viskosität von >0,5 bis 10 Pa*s, insbesondere eine Viskosität von >0,5 bis 5 Pa*s, insbesondere eine Viskosität von 1 bis 30 Pa*s, insbesondere eine Viskosität von 1 bis 15 Pa*s, insbesondere eine Viskosität von 1 bis 10 Pa*s, insbesondere eine Viskosität von 1 bis 5 Pa*s, aufweist.

Mit den nachfolgenden Tabellen 1 und 2 sind typische Epoxidharze aufgeführt, die erfindungsgemäß eingesetzt werden können.

Tabelle 1: Typische Beispiele für Epoxidharze E1 mit Ø EEW = < 200 g/Val

| Produzent | Harztyp | Chem. Type | Viskosität 25 °C [Pa*s] | EEW [g/eq] | Ø $EEW_i$ [g/Val] |
|---|---|---|---|---|---|
| | | | | | |
| Momentive | EPIKOTE 828 | DGEBPA | 12,0 - 14,0 | 184-190 | 187 |
| | EPIKOTE 828LVEL | DGEBPA | 10,0 - 12,0 | 182 - 187 | 185 |
| | EPIKOTE 162 | DGEBPA | 4,0 - 5,0 | 170 - 174 | 172 |
| | | | | | |
| Leuna | Epilox A 19-00 | DGEBPA | 9,0 - 13,0 | 182-192 | 187 |
| | | | | | |
| DOW | D.E.R. 332 | DGEBPA | 4,0 - 6,0 | 171-175 | 173 |
| | D.E.R. 331 | DGEBPA | 11,0 - 14,0 | 182-192 | 187 |
| | | | | | |
| Aditya Birla | EPOTEC YD 127 | DGEBPA | 9,0 - 11,0 | 180-188 | 184 |
| | | | | | |
| Huntsman | Araldite GY 260 | DGEBPA | 12,0 - 16,0 | 182-192 | 187 |
| | Araldite LY 1556 | DGEBPA | 9,5 - 12,0 | 189 -196 | 193 |

Tabelle 2: Typische Beispiele für Epoxidharze E2 mit Ø EEW = 150 bis < 400 g/Val

| Produzent | Harztyp | Chem. Type | Viskosität 25°C [Pa*s] | EEW [g/eq] | Ø $EEW_i$ [g/Val] |
|---|---|---|---|---|---|
| | | | | | |
| Momentive | EPIKOTE 834 | DGEBPA | 2,1 - 2,4* | 235-263 | 249 |
| | EPIKOTE 862 | DGEBPF | 2,5 - 4,5 | 165-173 | 169 |
| | EPIKOTE 238 | DGEBPA/F | 4,0 - 5,0 | 169-176 | 173 |
| | | | | | |
| Leuna | Epilox F 17-00 | DGEBPF | 2,5 - 4,5 | 165-173 | 169 |
| | Epilox AF 18-30 | DGEBPA/F | 4,0 - 6,0 | 170-180 | 175 |
| | | | | | |
| DOW | D.E.R. 337 | DGEBPA | 0,4 - 0,8* | 230 - 250 | 240 |
| | D.E.R. 354 | DGEBPF | 3,4 - 4,2 | 167-174 | 171 |
| | D.E.R. 356 | DGEBPA/F | 3,4 - 4,2 | 176-183 | 180 |
| | | | | | |
| Aditya Birla | EPOTEC YD 134 | DGEBPA | 0,5 - 1,5* | 240-260 | 250 |
| | EPOTEC YD 136 | DGEBPA | 0,5 - 1,5* | 290-335 | 313 |
| | EPOTEC YD 173 | DGEBPF | 7,0 - 11,0 | 167-175 | 171 |
| | | | | | |
| Huntsman | Araldite GY 280 | DGEBPA | 0,45 - 0,7* | 225-280 | 253 |
| | Araldite GY 285 | DGEBPF | 2,0 - 3,0 | 164-172 | 168 |
| *Lösungsviskosität in verschiedenen Lösungsmitteln | | | | | |

Die aufgeführten Beispiele sind, unter Berücksichtigung des Ø $EEW_{Mischung} \leq 200$ g/Val, equivalent einsetzbar.

Ganz besonders bevorzugt umfasst ein bevorzugtes Tränkharz ein Epoxidharzgemisch, das als härtbares Epoxidharz E1 und/ oder E2 und/ oder E3 mindestens ein Epoxidharz aus der Gruppe der Epoxidharze auf Basis Glycidylpolyether von 2,2-Bis(4-hydroxyphenyl)propan (Bisphenol A), dessen mit Brom substituiertes Derivat (Tetrabrombisphenol A), Glycidylpolyether von 2,2-Bis(4-hydroxyphenyl)-methan (Bisphenol F) und/oder Glycidylpolyether von Novolac-Harzen umfasst, wobei die härtbaren Epoxidharze E1 und/ oder E2 und/ oder E3 derart gewählt und/ oder gemischt werden, dass das resultierende Tränkharz vor der Härtung einen Ø $EEW_{Mischung}$ im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist. Insbesondere werden hierbei die härtbaren Epoxidharze E1 und/ oder E2 und/ oder E3 derart gewählt und/ oder gemischt werden, dass das resultierende Tränkharz vor der Härtung einen Ø EEWMischung im Bereich von 50 bis < 200 g/Val und eine Viskosität im Bereich von 5 bis 70 Pa*s, insbesondere eine Viskosität von 5 bis 30 Pa*s und ganz besonders bevorzugt eine Viskosität von 5 bis 15 Pa*s, bei 25 °C aufweist und bei 60 °C, somit nahe bei seiner Härtungstemperatur, eine Viskosität im Bereich von > 0,5 bis 45 Pa*s, insbesondere eine Viskosität von > 0,5 bis 30 Pa*s, insbesondere eine Viskosität von >0,5 bis 15 Pa*s, insbesondere eine Viskosität von >0,5 bis 10 Pa*s, insbesondere eine Viskosität von >0,5 bis 5 Pa*s, insbesondere eine Viskosität von 1 bis 30 Pa*s, insbesondere eine Viskosität von 1 bis 15 Pa*s, insbesondere eine Viskosität von 1 bis 10 Pa*s, insbesondere eine Viskosität von 1 bis 5 Pa*s, aufweist.

In dieser Ausführungsform ist es aber auch möglich, dass das Tränkharz oder das Epoxidharzgemisch weiterhin eine Reaktivkomponente umfasst. Die Zugabe dieser Reaktivkomponente ist jedoch nicht nur erforderlich, um die Viskosität oder den Ø $EEW_{Mischung}$ einzustellen, sondern kann aus anderen verfahrenstechnischen Erfordernissen günstig sein. Insofern eine Reaktivkomponente gemäß der vorliegenden Erfindung vorgesehen ist, so kann diese Reaktivkomponente insbesondere ausgewählt werden aus der Gruppe der Glycidylether, insbesondere aus der Gruppe der Glycidylether gemäß Formeln (III) bis (VI).

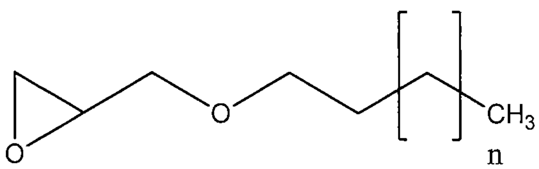

Formel (III)

n = 1 -18

mit n = eine Zahl von 1 bis 18

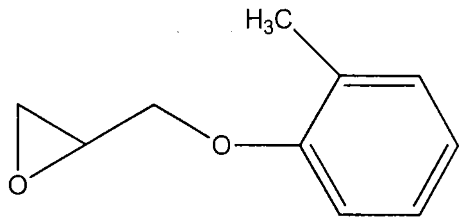

Formel (IV)

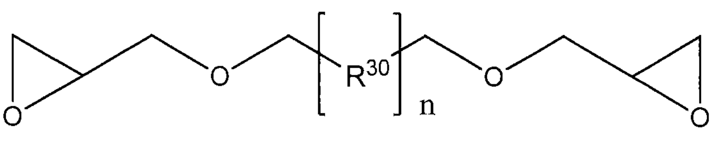

Formel (V)

wobei $R^{30}$ für einen Rest der Formel (V a), (V b), (V c), (V d) oder (V e) steht mit

n = eine Zahl von 1 bis 4

und

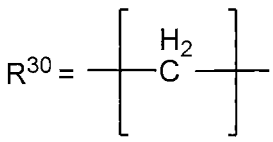

Formel (V a)

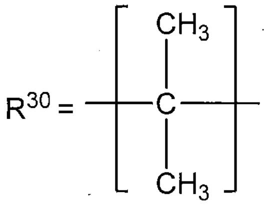

Formel (V b)

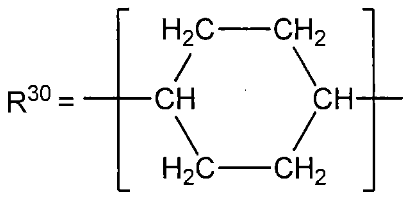

Formel (V c)

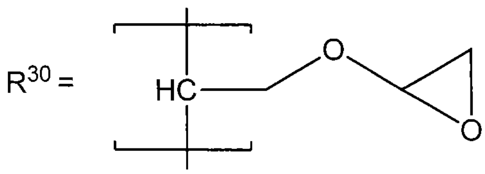

Formel (V d)

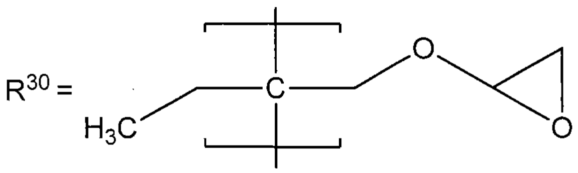

Formel (V e)

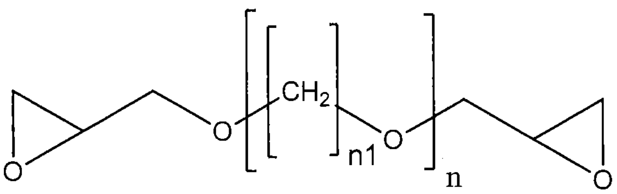

Formel (VI)

mit

n1 = eine Zahl von 3 bis 4 und
n = eine Zahl von 1 bis 10.

Bei den hier aufgeführten Reaktivkomponenten handelt es sich um aliphatische, cycloaliphatische und aromatische Glycidylether, die mono-, di- und tri- bzw. polyfunktionell (Anzahl der Epoxidgruppen/Oxirane) sein können. Diese werden zur Viskositätserniedrigung eingesetzt, um die Handhabung und Anwendung zu verbessern aber auch um Eigenschaften wie mechanische Festigkeit, Haftung und Flexibilität zu steuern.

Gemäß einer weiteren vorteilhaften Ausbildung ist damit auch ein Tränkharz Gegenstand der vorliegenden Erfindung, das a) ein Epoxidharzgemisch, b) ein latentes Härtungssystem, c) mindestens eine Reaktivkomponente, insbesondere aus der Gruppe der Glycidylether und weiterhin bevorzugt der Glycidylether gemäß einer Formel (III) bis Formel (VI) oder Mischungen hiervon, umfasst, wobei das Tränkharz bevorzugt die Reaktivkomponente in einer Menge von bis zu 5 Gew.-% bezogen auf das Gesamtgewicht des Tränkharzes umfasst. Das Tränkharz umfasst die Reaktivkomponente insbesondere in einer Menge von 0,5 bis 5 Gew.-%, mehr bevorzugt von 1 bis 4 Gew.-%, noch mehr bevorzugt von 2 bis 3 Gew.-%, bezogen auf das Gesamtgewicht des Tränkharzes.

Mit der nachfolgenden Tabelle 3 sind typische Reaktivverdünner oder Epoxidharze aufgeführt, die erfindungsgemäß eingesetzt werden können.

Tabelle 3: Typische Beispiele für Epoxidharze E3 mit Ø EEW = 100 bis < 400 g/Val

| **Produzent** | Harztyp | Chem. Beschaffenheit/ Funktionalität | Viskosität 25 °C [mPa*s] | EEW [g/eq] | Ø $EEW_i$ [g/Val] |
|---|---|---|---|---|---|
| | | | | | |
| **Momentive** | HELOXY 8 | Aliphatisch/monofunktionell | 6 - 8 | 280-295 | 289 |
| | HELOXY 65 | Aromatisch/monofunktionell | 20 - 30 | 225-240 | 233 |
| | HELOXY 67 | Aliphatisch/difunktionell | 13 - 18 | 120 - 135 | 128 |
| | HELOXY 48 | Aliphatisch/trifunktionell | 120 - 180 | 138-151 | 145 |
| | | | | | |
| **Leuna** | Epilox P13-18 | Aliphatisch/monofunktionell | 5-10 | 270-305 | 288 |
| | Epilox P13-42 | Aliphatisch/difunktionell | 40-70 | 310-350 | 330 |
| | Epilox P13-31 | Aliphatisch/trifunktionell | 100-150 | 130-140 | 135 |
| | | | | | |
| **DOW** | XZ 92767.00 | Aliphatisch/monofunktionell | 5-10 | 285-310 | 298 |
| | D.E.R. 732 | Aliphatisch/difunktionell | 60-70 | 310-330 | 320 |
| | D.E.R. 736 | Aliphatisch/difunktionell | 30-60 | 175-205 | 190 |
| | XZ 97104.00 | Aliphatisch/difunktionell | 12-24 | 130-145 | 133 |
| | XZ 92486.00 | Aliphatisch/trifunktionell | 200-280 | 110-130 | 120 |
| | | | | | |
| **Aditya Birla** | EPOTEC RD 108 | Aliphatisch/monofunktionell | 5-10 | 270-300 | 285 |
| | EPOTEC RD 105 | Aromatisch/monofunktionell | 5-10 | 175-190 | 183 |
| | EPOTEC RD 119 LE | Aliphatisch/difunktionell | 50-70 | 315-335 | 325 |
| | EPOTEC RD 111 | Aliphatisch/difunktionell | 60-90 | 165-185 | 175 |
| | EPOTEC RD 113 | Aliphatisch/trifunktionell | 100-200 | 135-150 | 143 |
| **Produzent** | Harztyp | Chem. Beschaffenheit/ Funktionalität | Viskosität 25 °C [mPa*s] | EEW [g/eq] | Ø $EEW_i$ [g/Val] |
| **Huntsman** | Araldite DY-E | Aliphatisch/monofunktionell | 4-12 | 278-317 | 298 |
| | Araldite DY-K | Aromatisch/monofunktionell | 6-12 | 175-189 | 182 |
| | Araldite DY-C | Aliphatisch/difunktionell | 50-100 | 154-167 | 161 |
| | Araldite DY-D | Aliphatisch/difunktionell | 15-25 | 118-125 | 122 |
| | Araldite DY-T | Aliphatisch/trifunktionell | 100-300 | 122-128 | 125 |

Gemäß einer weiteren Ausführung der vorliegenden Erfindung kann ein erfindungsgemäßes Tränkharz auch weitere Additive umfassen. Somit ist gemäß einer weiter vorteilhaften Ausführung auch ein Tränkharz von der vorliegenden Erfindung umfasst, das zusätzlich zu dem Epoxidharzgemisch und dem latenten Härtungssystem mindestens

ein Additiv umfasst, insbesondere mindestens einen Viskositätsmodifikator und weiter bevorzugt ein Viskositätsmodifikator ausgewählt aus der Gruppe der Mono-, Di- und Polyole, Ether, Polyether und Polyetherpolyole oder Mischungen hiervon umfasst. Besonders bevorzugt sind Tränkharze, die einen Viskositätsmodifikator aus der aufgeführten Gruppe umfassen, die ihrerseits einen Siedepunkt von mindestens 100 °C aufweisen. Diese Modifikatoren verbleiben bei der Härtung in den Auskleidungsschläuchen und werden vorzugsweise in die Polymermatrix eingebunden bzw. vernetzen diese Polymermatrix zusätzlich.

Als besonders wirkungsvolle Viskositätsmodifikatoren haben sich hierbei Viskositätsmodifikatoren aus der Gruppe der Mono-, Di- und Polyole, Ether, Etheralkohole, Polyether, Polyetherpolyole oder Mischungen hiervon gezeigt, insbesondere solche die ihrerseits einen Siedepunkt von mindestens 100 °C, insbesondere von mindestens 150 °C und ganz besonders bevorzugt von mindestens 180 °C aufweisen.

In einer besonders bevorzugten Ausführung umfasst ein erfindungsgemäßes Tränkharz mindestens einen Viskositätsmodifikator ausgewählt aus der Gruppe der Mono-, Di- und Polyole, Ether, Polyether, Etheralkohole und Polyetherpolyole oder Mischungen hiervon gemäß allgemeiner Formel (VII)

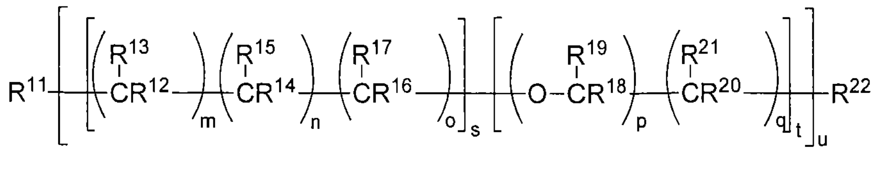

Formel (VII)

wobei für die Reste gleichzeitig oder unabhängig voneinander gilt:

| | |
|---|---|
| $R^{11}$, $R^{22}$ = | gleichzeitig oder unabhängig voneinander Wasserstoff, -OH oder C1-bis C15-Alkyl; |
| $R^{12}$, $R^{14}$, $R^{16}$, $R^{18}$, $R^{20}$ = | gleichzeitig oder unabhängig voneinander Wasserstoff, -OH oder C1- bis C5-Alkyl; |
| $R^{13}$, $R^{15}$, $R^{17}$, $R^{19}$, $R^{21}$ = | gleichzeitig oder unabhängig voneinander Wasserstoff, -OH oder C1- bis C5-Alkyl; |

mit

| | |
|---|---|
| m, n, o, s, p, q, t = | gleichzeitig oder unabhängig voneinander eine Zahl von 0 bis 10, insbesondere von 0 bis 5; und worin |
| m, s, u = | gleichzeitig oder unabhängig voneinander eine Zahl von 1 bis 10, insbesondere von 1 bis 5; und/oder |
| p, t, u = | gleichzeitig oder unabhängig voneinander eine Zahl von 1 bis 10, insbesondere von 1 bis 5. |

Weiterhin bevorzugt können dabei Monoalkohole aus der Gruppe der C6- bis C12-Alkohole, insbesondere 1-Hexanol, 1-Heptanol, 1-Octanol, 1-Nonanol, 1-Decanol, 2-Hexanol, 2-Heptanol, 2-Octanol, 2-Nonanol, 2-Decanol oder Mischungen hiervon, der Dialkohole aus der Gruppe der C2- bis C12-Alkohole, insbesondere Ethylenglykol, Propylenglykol, Butylenglykol, Pentylenglykol, Hexylenglykol oder Mischungen hiervon, der Trialkohole aus der Gruppe der C3- bis C12-Alkohole, insbesondere 1,2,3-Propantriol, 1,2,3-Butantriol, 1,2,3-Pentantriol, 1,2,3-Hexantriol, 1,2,4-Hexantriol, 1,2,6-Hexantriol oder Mischungen hiervon, der Ether, Polyether, Etheralkohole oder Polyetherpolyole aus der Gruppe Dibutylether, Dipentylether, Dihexylether, Diheptylether, Dioctylether, Dinonylether, Didecanylether, Methoxy- und Ethoxyalkohole, Methoxy- und Ethoxydialkohole, Polyethylenglycole, Polypropylenglycole, Polyethylenpropylenglycole, Polyethylenglycolmonoalkylether, insbesondere Polyethylenglycolmonomethylether, Polyethylenglycolmonoethylether, Ethylhexylether, Ethylheptylether, Ethyloctylether, Ethylnonylether, Ethyldecanylether oder Mischungen hiervon eingesetzt werden.

Gemäß einer weiteren vorteilhaften Ausbildung ist damit auch ein Tränkharz Gegenstand der vorliegenden Erfindung, das a) ein Epoxidharzgemisch, b) ein latentes Härtungssystem, c) mindestens ein Additiv, insbesondere aus der Gruppe der Mono-, Di- und Polyole, Ether, Polyether und Polyetherpolyole oder Mischungen hiervon umfasst, wobei das Tränkharz bevorzugt das Additiv in einer Menge von bis zu 10 Gew.-%, insbesondere von bis zu 5 Gew.-%, bezogen auf das Gesamtgewicht des Tränkharzes, umfasst. Das Tränkharz umfasst das Additiv insbesondere in einer Menge von 0,5 bis 5 Gew.-%, mehr bevorzugt von 1 bis 4 Gew.-% und noch mehr bevorzugt von 2 bis 3 Gew.-%, bezogen auf das Gesamtgewicht des Tränkharzes.

Die aufgeführten Beispiele sind, unter Berücksichtigung des Ø $EEW_{Mischung} \leq 200$ g/Val, equivalent einsetzbar.

Alkanole sind gesättigte Kohlenwasserstoffe mit einer oder mehreren Hydroxygruppen, wie bspw. 1,2,3-Propantriol, 1,3-Butandiol, 1,4-Butandiol, 1,5 Pentandiol.

| Produzent | Chemische Bezeichnung | Siedepunkt | Formel |
|---|---|---|---|
| Peter Greven | 1,2,3-Propantriol | 290 °C | 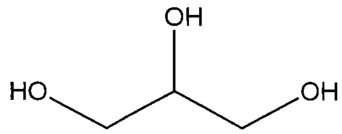 |
| Möller Chemie | 1,3-Butandiol | 207 °C | 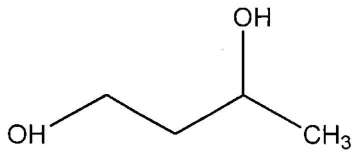 |
| Azelis | 1,4-Butandiol | 230 °C | 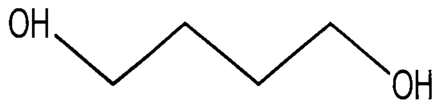 |
| BASF | 1,5 Pentandiol | 242 °C | 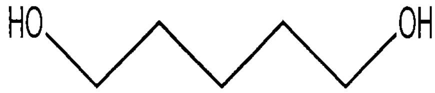 |

Die Tränkharzformulierung kann des Weiteren, an sich bekannte Zusätze, vor allem Thixotropierungsmittel und Farbstoffe enthalten.

Gemäß der vorliegenden Erfindung umfasst das Tränkharz ein latentes Härtungssystem, das seinerseits mindestens einen Härter H zur Härtung der Epoxidharze und mindestens einen Härtungsbeschleuniger B zur Beschleunigung der Härtung mittels des Härters H, umfasst. Hierbei können besonders bevorzugt Härter, insbesondere latente Härter, ausgewählt aus der Gruppe der Guanidine, Cyanoguanidine, Nitroguanidine, Acetylguanidine oder deren jeweilige Derivate oder Salze sowie Mischungen hiervon eingesetzt werden. Diese Härter weisen eine besonders hohe Latenz auf.

Entsprechend der vorliegenden Erfindung können als Härter H, insbesondere als latente Härter ausgewählt aus der Gruppe der Guanidine, Cyanoguanidine, Nitroguanidine, Acetylguanidine oder deren Derivate, insbesondere Härter der allgemeinen Formel (I) eingesetzt werden:

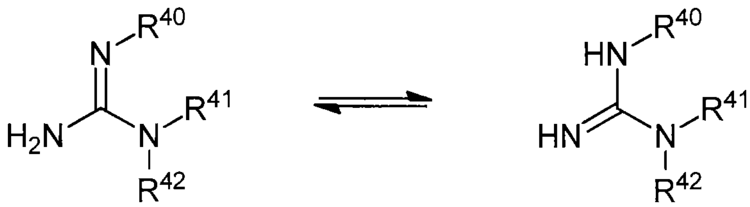

Formel (I)

wobei gilt:

$R^{40}$ = -CN, $-NO_2$, -(C=O)-$R^{43}$,
$R^{41}$ = -H, -Alkyl, -Benzyl, -Phenyl, -Aryl, -(C=O)-$R^{43}$,
$R^{42}$ = -H, -Alkyl,
$R^{43}$ = -H, -Alkyl, $-NH_2$, -NH-Alkyl, -O-Alkyl.

Hierbei sind solche Derivate gemäß Formel (I) besonders bevorzugt, für die $R^{41}$ = H oder -Alkyl oder $R^{42}$ = H oder -Alkyl bedeuten und Alkyl gleichzeitig oder unabhängig voneinander für die Reste Methyl, Ethyl, n-Propyl, Isopropyl oder n-Butyl steht.

Ganz besonders überraschend hat sich hierbei gezeigt, dass solche Guanidin-Derivate gemäß Formel (I) als Härter H eingesetzt werden können, für die gilt:

$R^{40}$ = -CN oder $-NO_2$,
$R^{41}$ = Wasserstoff, Methyl oder Ethyl,

$R^{42}$ = Wasserstoff, Methyl oder Ethyl.

Diese Cyanoguanidin-Derivate oder Nitroguanidin-Derivate zeichnen sich durch eine besonders hohe Latenz aus.

Beispielhaft und nicht limitierend können als Härter H der allgemeinen Formel (I) als bevorzugte Vertreter Cyanoguanidin, 1,1-Dimethyl-3-cyanguanidin, 1-Acetyl-3-cyanguanidin, 1-(p-Chlorphenyl)-3-cyanguanidin, Nitroguanidin, 1-Methyl-3-nitroguanidin, 1-Ethyl-3-nitroguanidin, 1-Butyl-3-nitroguanidin, 1-Benzyl-3-nitroguanidin, Formylguanidin, Acetylguanidin, Carbamoylguanidin, oder Methoxycarbonylguanidin eingesetzt werden.

Gemäß der vorliegenden Erfindung umfasst das Tränkharz ein latentes Härtungssystem, das seinerseits mindestens einen Härter H zur Härtung der Epoxidharze und mindestens einen Härtungsbeschleuniger B zur Beschleunigung der Härtung mittels des Härters H, umfasst. Hierbei können besonders bevorzugt Härtungsbeschleuniger, insbesondere latente Härtungsbeschleuniger, ausgewählt wird aus der Gruppe Harnstoffe, Imidazole oder deren jeweilige Derivate oder Salze sowie Mischungen hiervon verwendet werden.

Als Härtungsbeschleuniger zur Beschleunigung der Härtung mittels des Härters H können gemäß der vorliegenden Erfindung insbesondere Harnstoffderivate, insbesondere Harnstoffderivate gemäß Formel (IIa) oder aromatischen Harnstoffderivate, insbesondere aromatischen Harnstoffderivaten gemäß Formel (IIb), eingesetzt werden.

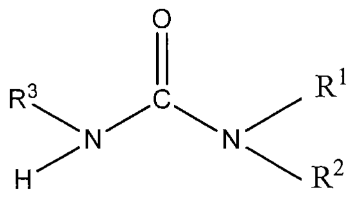

Formel (IIa)

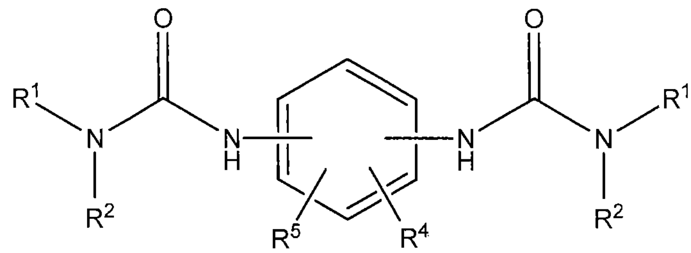

Formel (IIb)

wobei für die Reste $R^1$, $R^2$, $R^3$, $R^4$ und $R^5$ gleichzeitig oder unabhängig voneinander gilt:

$R^1$, $R^2$ = gleichzeitig oder unabhängig voneinander Wasserstoff, C1- bis C10-Alkyl, C3- bis C10-Cycloalkyl oder gemeinsam unter Bildung eines Ringes C3- bis C10-Alkylen;

$R^3$ = Wasserstoff, C1- bis C10-Alkyl, C3- bis C10-Cycloalkyl, Aryl, oder mit $-NHC(O)NR^1R^2$ substituiertes C1- bis C10-Alkyl, oder mit $-NHC(O)NR^1R^2$ substituiertes C3- bis C10-Cycloalkyl.

$R^4$, $R^5$ = gleichzeitig oder unabhängig voneinander Wasserstoff, Halogen, C1- bis C5-Alkyl, $-NHC(O)NR^1R^2$

Besonders bevorzugt sind Harnstoffderivate gemäß Formel (IIa) für die gilt:

$R^1$, $R^2$ = gleichzeitig oder unabhängig voneinander Wasserstoff oder C1- bis C5-Alkyl und

$R^3$ = Wasserstoff oder C1- bis C5-Alkyl.

Besonders bevorzugt sind aromatische Harnstoffderivate gemäß Formel (IIb) für die gilt:

$R^1$, $R^2$ = gleichzeitig oder unabhängig voneinander Wasserstoff oder C1- bis C5-Alkyl und

$R^4$, $R^5$ = gleichzeitig oder unabhängig voneinander Wasserstoff oder C1- bis C5-Alkyl.

Dabei soll im Zusammenhang mit der vorliegenden Erfindung unter C1- bis C10-Alkyl ein linearer oder verzweigter Alkylrest mit einer Kettenlänge bis zu 10 Kohlenstoffatomen verstanden sein, der insbesondere die allgemeine Formel $C_nH_{2n+1}$ aufweist, wobei n = 1 bis 10 bedeuted. Dabei ist bevorzugt vorgesehen, dass C1- bis C10-Alkyl insbesondere Methyl, Ethyl, Propyl, Butyl, Pentyl, Hexyl, Heptyl, Octyl, Nonyl oder Decyl bedeutet, wobei diese Alkylreste weiterhin bevorzugt auch unverzweigt, einfach verzweigt, mehrfach verzweigt sein können.

Bevorzugt sind solche C1- bis C10-Alkylreste, die ihrerseits einfach oder mehrfach alkylsubstituiert, insbesondere mit C1- bis C5-Alkyl substituiert sind. C1- bis C5-Alkyl gemäß der vorliegenden Erfindung kann weiterhin bevorzugt Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl oder 1-Ethylpropyl bedeuten.

Weiterhin bevorzugt bedeuten die Reste $R^1$ und $R^2$ in Zusammenhang mit der Formel (IIa) einen Methylrest.

Gleichzeitig oder unabhängig hiervon bedeuten der Rest $R^3$ insbesondere Methyl oder Wasserstoff. Ganz besonders bevorzugt ist 1,1-Dimethylharnstoff (also $R^1$= $R^2$ = Methyl und $R^3$ = Wasserstoff).

Weiterhin bevorzugt bedeuten die Reste $R^1$ und $R^2$ in Zusammenhang mit der Formel (IIb) ein Methylrest. Gleichzeitig oder unabhängig hiervon bedeuten die Reste die Reste $R^4$ und $R^5$ insbesondere Methyl oder Wasserstoff. Ganz besonders bevorzugt ist 1,1'-(4-Methyl-m-phenylen)-bis-(3,3-dimethylharnstoff) und 1,1'-(2-Methyl-m-phenylen)-bis-(3,3-dimethylharnstoff) (also $R^1$= $R^2$ = $R^5$ Methyl und $R^4$ Wasserstoff).

Gemäß einer Weiterbildung der Erfindung ist hierbei insbesondere vorgesehen, dass die Art und Menge des Härtungsbeschleunigers derart gewählt wird, dass das Tränkharz einen Härtungstemperaturbereich von 60 bis 100 °C, insbesondere von 60 bis 90 °C, insbesondere von 60 bis 80 °C, aufweist.

Gemäß einer Weiterbildung der Erfindung ist hierbei insbesondere vorgesehen, dass die Art und Menge des Härtungsbeschleunigers derart gewählt wird, dass das Tränkharz einen Härtungszeitbereich von 1 bis 4 h, insbesondere von 1 bis 3 h, insbesondere von 1 bis 2 h, aufweist.

Ganz besonders bevorzugt können gemäß der vorliegenden Erfindung als Härtungsbeschleuniger H insbesondere Harnstoffe ausgewählt aus der Gruppe der Monourone und Diurone eingesetzt werden, wobei weiterhin bevorzugt insbesondere Bis-[4-(N,N-dimethylurea)-cyclohexyl]-methane, 1,1'-Hexamethylene-bis-[3,3-dimethyl-urea], 1,1'-m-Xylylene-bis-(3,3-dimethylurea), N,N"-1,4-phenylene-bis-[N',N'-dimethyl-urea], 4,4'-Methylenediphenylene bis(dimethylurea), 1-(N,N-Dimethylurea)-3-(N,N-dimethylureamethyl)-3,5,5-trimethyl-cyclohexane und/ oder Mischungen hiervon verwendet werden.

Hervorzuheben ist an dieser Stelle, das weder das latente Härtungssystem noch der Härter H, noch der Härtungsbeschleuniger B, noch irgendeine Komponente des Härtungssystems in isolierter Form vorliegt; insbesondere liegen diese Komponenten nicht in verkapselter Form vor. Hierdurch kann eine sehr gut definierte, d.h. unter definierten Bedingungen in einem relativ kleinen Temperatur- und Zeitbereich stattfindende Härtung des Tränkharzes bereitgestellt werden.

Weiterhin bevorzugt ist, dass das Tränkharz neben dem Epoxidharzgemisch und dem latenten Härtungssystem kein Lösemittel oder Lösungsvermittler umfasst und somit lösemittelfrei oder lösungsvermittlerfrei ist. Als lösemittelfrei oder lösungsvermittlerfrei wird im Zusammenhang mit der vorliegenden Erfindung ein Tränkharz verstanden, das im Wesentlichen frei von Lösemitteln oder Lösungsvermittlern ist und herstellungsbedingt höchstens 3,0 Gew.-%, insbesondere höchstens 2,0 Gew.-%, insbesondere höchstens 1,0 Gew.-% Lösemittel oder Lösungsvermittler und ganz besonders bevorzugt kein Lösemittel oder Lösungsvermittler umfasst oder enthält.

Wie bereits ausgeführt, ist auch ein Reparatur- und/oder Auskleidungsschlauch für wasserführende Zu- und Ablaufkanäle Gegenstand der vorliegenden Erfindung, der ein Trägermaterial und ein erfindungsgemäßes Tränkharz umfasst.

Als Trägermaterial können hierbei jedwede Materialien zum Einsatz gebracht werden, die für den Einbau in Zu- und/oder Abwässerkanäle einsetzbar bzw. nach regulatorisch behördlichen Auflagen zugelassen sind.

Aufgrund der eingestellten Viskosität im Tränkharz kann dabei das Tränkharz in einer Menge von 40 bis 85 Gew.-% (bezogen auf das Gesamtgewicht des Reparatur- und/oder Auskleidungsschlauches) auf das Trägermaterial aufgebracht werden.

Letztendlich ist somit auch die Verwendung eines hierin beschriebenen Tränkharzes zur Imprägnierung eines Reparatur- oder Auskleidungsschlauches für wasserführende Zu- und Ablaufkanäle Gegenstand der vorliegenden Erfindung.

Die nachfolgenden Beispiele sollen das Verfahren der Erfindung näher erläutern.

## Beispiele

### 1) Verwendete Substanzen

a) Epoxidharze

| | |
|---|---|
| Araldite DY-D, Ø $EEW_i$ = 122 g/Val | [Huntsman, Bergkamen] |
| Araldite GY 285, Ø $EEW_i$ = 168 g/Val | [Huntsman, Bergkamen] |
| Araldite LY1556, Ø $EEW_i$ = 193 g/Val | [Huntsman, Bergkamen] |
| D.E.R. 354, Ø $EEW_i$ = 171 g/Val | [DOW, Stade] |
| D.E.R. 736, Ø $EEW_i$ = 190 g/Val | [DOW, Stade] |
| Epikote 162, Ø $EEW_i$ = 172 g/Val | [Momentive, Duisburg] |
| Epikote 828, Ø $EEW_i$ = 187 g/Val | [Momentive, Duisburg] |
| Epikote 862, Ø $EEW_i$ = 169 g/Val | [Momentive, Duisburg] |

(fortgesetzt)

| | |
|---|---|
| a) Epoxidharze | |
| Epilox F 17-00, Ø $EEW_i$ = 169 g/Val | [Leuna Harze, Leuna] |
| Epilox P13-31, Ø $EEW_i$ = 135 g/Val | [Leuna Harze, Leuna] |
| Epilox P13-42, Ø $EEW_i$ = 330 g/Val | [Leuna Harze, Leuna] |
| Epotec YD 134, Ø $EEW_i$ = 250 g/Val | [Aditya Birla, Map Ta Put, Thailand] |
| Epotec YD 173, Ø $EEW_i$ = 171 g/Val | [Aditya Birla, Map Ta Put, Thailand] |
| Heloxy 65, Ø $EEW_i$ = 233 g/Val | [Momentive, Duisburg] |
| Epilox P13-42, Ø $EEW_i$ = 330 g/Val | [Leuna Harze, Leuna] |
| b) Additive | |
| 1,2,3-Propantriol | [Peter Greven, Bad Münster Eifel] |
| 1,4-Butandiol | [Azelis, St. Augustin] |
| c) Härter | |
| DYHARD® 100S | [AlzChem AG, Trostberg] |
| d) Beschleuniger | |
| DYHARD® UR500 | [AlzChem AG, Trostberg] |
| DYHARD® URAcc57 | [AlzChem AG, Trostberg] |

2) Verfahren zur Herstellung der Tränkharzformulierung

Allgemeines Herstellungsverfahren der Tränkharzformulierungen:

Die Bestandteile E1, E2, E3 und A werden bei Raumtemperatur in einem Hochgeschwindigkeitsrührer (Dissolver) vorgelegt und homogen gemischt, bei Bedarf unter Erwärmung auf bis zu 60 °C und anschließendem abkühlen auf 20 bis 25 °C. Anschließend werden die pulverförmigen Bestandteile Härter H, Beschleuniger B1 und/oder B2 in dieser Reihenfolge erst zugemischt und anschließend gut dispergiert. Die Formulierungstemperatur sollte während der Härter-Zugabe 50 °C und während der Beschleuniger-Zugabe 40 °C nicht überschreiten.

3) Methodik der Auswertung

| | |
|---|---|
| a) Viskosität: | Messung auf HAAKE Rheostress 1<br>durchgeführt bei 25 °C in Pa*s, mit Drehkörper Kegel 1°, 35/1, Ti, Ø 35 mm, mit einer Scherrate von 5,0 1/s (reziproke Sekunde) |
| b) Dyn-DSC: | Bestimmung von Onset und Peak<br>Messung auf Mettler Toledo DSC 822<br>Methode: 30 - 250 °C, mit einer Aufheizrate von 10 K/min |
| | Bestimmung von Tg<br>Messung auf Mettler Toledo DSC 822<br>Vorbehandlung: Probe 2 h isotherm bei 80 °C härten<br>Methode: 30 - 250 °C, mit einer Aufheizrate von 10 K/min |
| c) Isotherme-DSC: | Bestimmung von Reaktionszeit (Rz) Endpunkt, Rz Peak und 90 % Reaktionsumsatz<br>Messung auf Mettler Toledo DSC 822<br>Methode: 80 °C für 180 min, |

(fortgesetzt)

| | |
|---|---|
| d) Lagerstabilität: | Lagerfähigkeit der Epoxidharz-Zusammensetzungen in Tagen (d) nach Lagerung bei 23 °C im Klimaschrank.<br>Definition der Lagerstabilität: Ist die Zeit in Tagen (d) nach der sich die Ausgangsviskosität der Tränkharzformulierung verdoppelt hat. |

4) Tränkharzformulierunq

Tabelle 4: Zusammensetzung erfindungsgemäßer Tränkharzformulierungen mit zwei verschiedenen Epoxidharzen

| | E1 | E2 | E3 | E1 : E2 | E1 : E3 | E2 : E3 | A | H | B1 | B2 | | |
|---|---|---|---|---|---|---|---|---|---|---|---|---|
| Nr. | Ø EEW 50 - 200 [g/Val] | Ø EEW 150 - 400 [g/Val] | Ø EEW 100 - 400 [g/Val] | Verh. | Verh. | Verh. | Additiv | Härter | Beschleuniger | Beschleuniger | Viskosität [Pa*s] | Ø EEW $_{Mischung}$ [g/Val] |
| **01** | 83 | 17 | - | 4,9:1 | | | 1-10 | 0,5-5 | 0,5-10 | 0,5-25 | <70 | <200 |
| **02** | 80 | 20 | - | 4:1 | | | 1-10 | 0,5-5 | 0,5-10 | 0,5-25 | <70 | <200 |
| **03** | 75 | 25 | - | 3:1 | | | 1-10 | 0,5-5 | 0,5-10 | 0,5-25 | <70 | <200 |
| **04** | 67 | 33 | - | 2:1 | | | 1-10 | 0,5-5 | 0,5-10 | 0,5-25 | <70 | <200 |
| **05** | 50 | 50 | - | 1:1 | | | 1-10 | 0,5-5 | 0,5-10 | 0,5-25 | <70 | <200 |
| **06** | 33 | 67 | - | 1:2 | | | 1-10 | 0,5-5 | 0,5-10 | 0,5-25 | <70 | <200 |
| **07** | 25 | 75 | - | 1:3 | | | 1-10 | 0,5-5 | 0,5-10 | 0,5-25 | <70 | <200 |
| **08** | 20 | 80 | - | 1:4 | | | 1-10 | 0,5-5 | 0,5-10 | 0,5-25 | <70 | <200 |
| **09** | 17 | 83 | - | 1: 4,9 | | | 1-10 | 0,5-5 | 0,5-10 | 0,5-25 | <70 | <200 |
| **10** | 100 | - | 5 | | 20:1 | | 1-10 | 0,5-5 | 0,5-10 | 0,5-25 | <70 | <200 |
| **11** | 100 | - | 10 | | 10:1 | | 1-10 | 0,5-5 | 0,5-10 | 0,5-25 | <70 | <200 |
| **12** | 100 | - | 20 | | 5:1 | | 1-10 | 0,5-5 | 0,5-10 | 0,5-25 | <70 | <200 |
| **13** | - | 100 | 5 | | | 20:1 | 1-10 | 0,5-5 | 0,5-10 | 0,5-25 | <70 | <200 |
| **14** | - | 100 | 10 | | | 10:1 | 1-10 | 0,5-5 | 0,5-10 | 0,5-25 | <70 | <200 |
| **15** | - | 100 | 20 | | | 5:1 | 1-10 | 0,5-5 | 0,5-10 | 0,5-25 | <70 | <200 |

Die Bestandteile E1, E2 und E3 wurden immer so gewählt, dass sich daraus ein Ø EEW Mischung von < 200 g/Val ergeben hat. Die Bestandteile der gesamten Tränkharzformulierung wurden auf eine Viskosität von < 70 Pa*s abgestimmt.

Beispiele 1 bis 9 zeigen Formulierungen aus E1 und E2 mit einem Verhältnis E1 : E2 von 4,9 : 1 bis 1 : 4,9 . Beispiele 10 bis 12 zeigen Formulierungen aus E1 und E3 mit einem Verhältnis E1 : E3 von 20 : 1 bis 5 : 1. Beispiele 13 bis 15 zeigen Formulierungen aus E2 und E3 mit einem Verhältnis E2 : E3 von 20 : 1 bis 5 : 5.

Tabelle 5: Zusammensetzung erfindungsgemäßer Tränkharzformulierung mit drei verschiedenen Tränkharzen

| | E1 | E2 | E3 | (E1+E2) : E3 | A | H | B1 | B2 | | |
|---|---|---|---|---|---|---|---|---|---|---|
| **Nr.** | **Ø EEW 50 - 200 [g/Val]** | **Ø EEW 150 - 400 [g/Val]** | **Ø EEW 100 - 400 [g/Val]** | **Verh.** | **Additiv** | **Härter** | **Beschleuniger** | **Beschleuniger** | **Viskosität [Pa*s]** | **Ø EEW $_{Mischung}$ [g/Val]** |
| **16** | 83 | 17 | 5 | 20:1 | 1-10 | 0,5-5 | 0,5-10 | 0,5-25 | <70 | <200 |
| **17** | 83 | 17 | 10 | 10:1 | 1-10 | 0,5-5 | 0,5-10 | 0,5-25 | <70 | <200 |
| **18** | 83 | 17 | 20 | 5:1 | 1-10 | 0,5-5 | 0,5-10 | 0,5-25 | <70 | <200 |
| **19** | 80 | 20 | 5 | 20:1 | 1-10 | 0,5-5 | 0,5-10 | 0,5-25 | <70 | <200 |
| **20** | 80 | 20 | 10 | 10:1 | 1-10 | 0,5-5 | 0,5-10 | 0,5-25 | <70 | <200 |
| **21** | 80 | 20 | 20 | 5:1 | 1-10 | 0,5-5 | 0,5-10 | 0,5-25 | <70 | <200 |
| **22** | 75 | 25 | 5 | 20:1 | 1-10 | 0,5-5 | 0,5-10 | 0,5-25 | <70 | <200 |
| **23** | 75 | 25 | 10 | 10:1 | 1-10 | 0,5-5 | 0,5-10 | 0,5-25 | <70 | <200 |
| **24** | 75 | 25 | 20 | 5:1 | 1-10 | 0,5-5 | 0,5-10 | 0,5-25 | <70 | <200 |
| **25** | 67 | 33 | 5 | 20:1 | 1-10 | 0,5-5 | 0,5-10 | 0,5-25 | <70 | <200 |
| **26** | 67 | 33 | 10 | 10:1 | 1-10 | 0,5-5 | 0,5-10 | 0,5-25 | <70 | <200 |
| **27** | 67 | 33 | 20 | 5:1 | 1-10 | 0,5-5 | 0,5-10 | 0,5-25 | <70 | <200 |
| **28** | 50 | 50 | 5 | 20:1 | 1-10 | 0,5-5 | 0,5-10 | 0,5-25 | <70 | <200 |
| **29** | 50 | 50 | 10 | 10:1 | 1-10 | 0,5-5 | 0,5-10 | 0,5-25 | <70 | <200 |
| **30** | 50 | 50 | 20 | 5:1 | 1-10 | 0,5-5 | 0,5-10 | 0,5-25 | <70 | <200 |
| **31** | 33 | 67 | 5 | 20:1 | 1-10 | 0,5-5 | 0,5-10 | 0,5-25 | <70 | <200 |
| **32** | 33 | 67 | 10 | 10:1 | 1-10 | 0,5-5 | 0,5-10 | 0,5-25 | <70 | <200 |
| **33** | 33 | 67 | 20 | 5:1 | 1-10 | 0,5-5 | 0,5-10 | 0,5-25 | <70 | <200 |
| **34** | 25 | 75 | 5 | 20:1 | 1-10 | 0,5-5 | 0,5-10 | 0,5-25 | <70 | <200 |
| **35** | 25 | 75 | 10 | 10:1 | 1-10 | 0,5-5 | 0,5-10 | 0,5-25 | <70 | <200 |
| **36** | 25 | 75 | 20 | 5:1 | 1-10 | 0,5-5 | 0,5-10 | 0,5-25 | <70 | <200 |
| **37** | 20 | 80 | 5 | 20:1 | 1-10 | 0,5-5 | 0,5-10 | 0,5-25 | <70 | <200 |
| **38** | 20 | 80 | 10 | 10:1 | 1-10 | 0,5-5 | 0,5-10 | 0,5-25 | <70 | <200 |
| **39** | 20 | 80 | 20 | 5:1 | 1-10 | 0,5-5 | 0,5-10 | 0,5-25 | <70 | <200 |
| **40** | 17 | 83 | 5 | 20:1 | 1-10 | 0,5-5 | 0,5-10 | 0,5-25 | <70 | <200 |
| **41** | 17 | 83 | 10 | 10:1 | 1-10 | 0,5-5 | 0,5-10 | 0,5-25 | <70 | <200 |
| **42** | 17 | 83 | 20 | 5:1 | 1-10 | 0,5-5 | 0,5-10 | 0,5-25 | <70 | <200 |

Die Bestandteile E1, E2 und E3 wurden immer so gewählt, dass sich daraus ein Ø EEW Mischung von < 200 g/Val ergeben hat. Die Bestandteile der gesamten Tränkharzformulierung wurden auf eine Viskosität von < 70 Pa*s abgestimmt.

Beispiele 16 bis 42 zeigen Formulierungen aus E1 und E2 und E3 mit einem Verhältnis (E1 + E2) : E3 von 20 : 1 bis 5 : 1.

Tabelle 6: Exakte Zusammensetzung erfindungsgemäßer Tränkharzformulierung mit zwei bzw. drei verschiedenen Tränkharzen

| | E1 | E2 | E3 | (E1+E) : E3 | E1 : E2 | E1 : E3 | E2 : E3 | A | H | B1 | B2 | | | | |
|---|---|---|---|---|---|---|---|---|---|---|---|---|---|---|---|
| **Nr.** | **Ø EEW 50 - 200 [g/Val]** | **Ø EEW 150 - 400 [g/Val]** | **Ø EEW 100 - 400 [g/Val]** | **Verh.** | **Verh.** | **Verh.** | **Verh.** | **Additiv** | **Härter** | **Beschleuniger** | **Beschleuniger** | **Viskosität bei 25 °C [Pa*s]** | **Viskosität bei 60 °C [Pa*s]** | **Viskosität bei 80 °C [Pa*s]** | **Ø EEW $_{Mischung}$ [g/Val]** |
| **01.1** | 83 | 17 | - | | 4,9:1 | | | 3 | 3 | 2 | 6 | 12 | 0,7 | 0,3 | 195 |
| **05.1** | 50 | 50 | - | | 1:1 | | | 5 | 3 | 2 | 6 | 12 | 1,4 | 0,6 | 170 |
| **09.1** | 17 | 83 | - | | 1:4,9 | | | 3 | 3 | 2 | 6 | 11 | 2,9 | 1,5 | 172 |
| **10.1** | 100 | - | 5 | | | 20:1 | | 3 | 3 | 8 | 0 | 10 | 0,6 | 0,3 | 189 |
| **14.1** | - | 100 | 10 | | | | 10:1 | 5 | 5 | 6 | 2 | 9 | 1,1 | 0,8 | 176 |
| **17.1** | 83 | 17 | 10 | 10:1 | | | | 10 | 3 | 2 | 6 | 8 | 3,5 | 2,8 | 179 |
| **24.1** | 75 | 25 | 20 | 5:1 | | | | 5 | 3 | 4 | 4 | 7 | 0,7 | 0,4 | 190 |
| **27.1** | 67 | 33 | 20 | 5:1 | | | | 3 | 5 | 8 | 2 | 11 | 0,7 | 0,5 | 175 |
| **28.1** | 50 | 50 | 5 | 20:1 | | | | 5 | 0,5 | 0,5 | 24 | 15 | 10,9 | 9,0 | 175 |
| **32.1** | 33 | 67 | 10 | 10:1 | | | | 5 | 3 | 2 | 6 | 9 | 0,7 | 0,3 | 177 |
| **35.1** | 25 | 75 | 10 | 10:1 | | | | 3 | 3 | 2 | 6 | 9 | 0,6 | 0,3 | 179 |
| **41.1** | 17 | 83 | 10 | 10:1 | | | | 5 | 1 | 6 | 4 | 10 | 2,4 | 1,8 | 168 |

Beispiele 01.1 bis 09.1 zeigen Formulierungen aus E1 und E2 mit einem Verhältnis E1 : E2 von 4,9 : 1 bis 1 : 4,9. Beispiel 10.1 zeigt eine Formulierung aus E1 und E3 mit einem Verhältnis E1 : E3 von 20 : 1 bis 5 : 1. Beispiel 14.1 zeigt eine Formulierung aus E2 und E3 mit einem Verhältnis E2 : E3 von 20 : 1 bis 5 : 1. Beispiele 17.1 bis 41.1 zeigen Formulierungen aus E1 und E2 und E3 mit einem Verhältnis (E1 + E2) : E3 von 20 : 1 bis 5 : 1.

Tabelle 7: Experimentelle Ergebnisse erfindungsgemäßer Tränkharzformulierungen

| Nr. | 01.1 | 05.1 | 09.1 | 10.1 | 14.1 | 17.1 | 24.1 | 27.1 | 28.1 | 32.1 | 35.1 | 41.1 |
|---|---|---|---|---|---|---|---|---|---|---|---|---|
| Ø $EEW_{Mischung}$ [g/Val] | 195 | 170 | 172 | 189 | 176 | 179 | 190 | 175 | 175 | 177 | 179 | 168 |
| Viskosität bei 25 °C [Pa*s] | 12 | 12 | 11 | 10 | 9 | 8 | 7 | 11 | 15 | 9 | 9 | 10 |
| Viskosität bei 60 °C [Pa*s] | 0,7 | 1,4 | 2,9 | 0,6 | 1,1 | 3,5 | 0,7 | 0,7 | 10,9 | 0,7 | 0,6 | 2,4 |
| Viskosität bei 80 °C [Pa*s] | 0,3 | 0,6 | 1,5 | 0,3 | 0,8 | 2,8 | 0,4 | 0,5 | 9,0 | 0,3 | 0,3 | 1,8 |
| DSC Tg nach 2 h bei 80 °C [°C] | 81 | 82 | 84 | 81 | 84 | 88 | 87 | 89 | 96 | 94 | 92 | 83 |
| DSC Onset [°C] | 116 | 112 | 115 | 116 | 117 | 118 | 118 | 119 | 114 | 114 | 114 | 117 |
| DSC Peak [°C] | 138 | 137 | 136 | 137 | 137 | 141 | 135 | 136 | 132 | 134 | 134 | 138 |
| DSC Rz Endpunkt Iso bei 80 °C [min] | 150 | 140 | 130 | 160 | 140 | 150 | 120 | 115 | 100 | 150 | 140 | 140 |
| DSC Rz Peak Isotherm bei 80 °C [min] | 80 | 70 | 70 | 80 | 80 | 90 | 70 | 70 | 50 | 70 | 60 | 60 |
| 90 % Reaktionsumsatz bei 80 °C [min] | 120 | 120 | 120 | 110 | 105 | 120 | 110 | 105 | 80 | 120 | 110 | 110 |
| Lagerstabilität bei 23 °C [d] | 10 | 7 | 18 | 14 | 21 | 14 | 12 | 10 | 7 | 21 | 24 | 14 |

Beurteilung und Wertung der experimentellen Ergebnisse der einzelnen Formulierungen

Die Tränkharzformulierungen 14.1, 17.1 24,1, 32.1 und 35.1 zeichnen sich durch eine sehr niedrige Viskosität und damit sehr gute Verarbeitbarkeit aus.

Bei den Tränkharzformulierungen 28.1, 32.1 und 35.1 konnten sehr hohe Tg erreicht werden.

Die Tränkharzformulierungen 24.1, 27.1 und 28.1 erreichen sehr niedrige Rz Endpunkte was eine sehr schnelle Gesamthärtung erlaubt.

Die sehr niedrigen Rz Peak Zeiten bei den Tränkharzformulierungen 28.1 und 35.1 zeigen ein sehr rasches anspringen der Härtungsreaktion.

Der 90 % Reaktionsumsatz bei den Versuchs-Nr. 10.1, 14.1, 24.1, 35.1 und 41.1 zeigt das schnelle Reaktionsverhalten der Tränkharzformulierungen. Besonders die Tränkharzformulierungen 28.1 hebt sich hier deutlich hervor.

Die Tränkharzformulierungen 09.1, 10.1, 17.1 und 41.1 zeigen ein gute, die Tränkharzformulierungen 14.1, 32.1 und 35.1 ein sehr gute Lagerstabiltität bei 23 °C.

5) Anwendung der einkomponentigen Tränkharzformulierung (Harz-Härter-Beschleuniger-Mischung)

Die Anwendung der beschriebenen einkomponentigen Tränkharzformulierungen finden auf textilen Trägermaterialien statt, die für die unterschiedlichsten Bereiche, u. a. auch für die Kanalsanierung mittels Textilliner verwendet werden.
Die erfindungsgemäßen einkomponentigen Tränkharzformulierungen zeigen im Gegensatz zum Stand der Technik wesentliche Vorteile bezüglich Ausbringung auf das Trägermaterial, was im Wesentlichen durch die erfindungsgemäßen Viskositäten bestimmt wird, bezüglich schneller Reaktion und Aushärtung bei niedrigen Temperaturen mittels Wärmeübertragung (< 100°C) ohne Strahlungshärtung, bedingt durch die geschickte Auswahl von Härter und Beschleunigern und im ausgehärteten Zustand hohe Materialfestigkeiten (Tg), was hohe Druckfestigkeiten und damit Abriebfestigkeiten beinhaltet.

Tabelle 8: Mechanische Kennwerte von Auskleidungsschläuchen getränkt mit erfindungsgemäßen Tränkharz

| | DSC | | 3-Punkt-Biegeversuch | | Scheiteldruckversuch | |
|---|---|---|---|---|---|---|
| **Nr.** | **Ø Tg [°C]** | **Umsatz der Reaktion [%]** | **E kurz [N/mm$^2$]** | **$\Sigma$kurz [N/mm$^2$]** | **E kurz Scheitel [N/mm$^2$]** | **Ringsteif Igkeit [N/mm$^2$]** |
| **05.1** | 97 | 91 | 2482 | 35 | 2480 | 0,056 |
| **28.1** | 96 | 97 | 2643 | 45 | 2700 | 0,065 |
| | | | | | | |
| **Handelsübliche 2K-Systeme** | 90 | 99 | 2600 | 40 | - | - |

Hinzu kommt die lange Lagermöglichkeit der einkomponentigen Tränkharzformulierungen von bis zu 24 Tagen bei 23°C ohne signifikante Viskositätserhöhung, die sich nach der Ausbringung auf das textile Trägermaterial auf bis zu 48 Tage bei 23°C verdoppeln kann.

Somit sind mit den erfindungsgemäßen Tränkharzformulierungen die wesentlichen Voraussetzungen geschaffen um werksseitig imprägnierte, fertig konfektionierte und lange lagerfähige Auskleidungsschläuche z. B. für Kanalsanierungen herzustellen. Diese können jederzeit mit einer definierten Qualität, ohne Mischfehler und wetterunabhängig hergestellt werden und werden an der Baustelle fertig, d. h. ohne weitere Bearbeitungen eingebracht und ausgehärtet. Dieses Verfahren bietet vor allem bei Kanälen mit kleinen Rohrquerschnitten Vorteile in der Effektivität der Bauausführung und in der Qualität der resultierenden Reparatur.

**Patentansprüche**

1. Tränkharz auf Basis von härtbaren Epoxidharzen zur Imprägnierung von Reparatur- und/oder Auskleidungsschläuchen für wasserführende Zu- und Ablaufkanäle umfassend

    a) ein Epoxidharzgemisch umfassend ein erstes härtbares Epoxidharz E1 und mindestens ein weiteres, von

dem ersten Epoxidharz E1 verschiedenes härtbares Epoxidharz E2 und

b) ein latentes Härtungssystem umfassend mindestens einen Härter H zur Härtung der Epoxidharze und mindestens einen Härtungsbeschleuniger B, zur Beschleunigung der Härtung mittels des Härters H,

wobei das Tränkharz vor der Härtung einen Ø $EEW_{Mischung}$ im Bereich von 50 bis < 200 g/ Val und eine Viskosität im Bereich von 5 bis 70 Pa*s bei 25 °C aufweist, gemessen an einem HAAKE RheoStress 1 Viskosimeter mit einem Drehkörper Kegel 1° aus Titan mit einem Durchmesser von 35 mm und einer Scherrate von 5,0 1/s.

2. Tränkharz nach Anspruch 1, **dadurch gekennzeichnet, dass** das Tränkharz vor der Härtung einen Ø $EEW_{Mischung}$ im Bereich von 50 bis < 200 g/ Val und eine Viskosität im Bereich von 5 bis 70 Pa*s bei 25 °C und eine Viskosität im Bereich von >0,5 bis 45 Pa*s bei 60 °C aufweist, gemessen an einem HAAKE RheoStress 1 Viskosimeter mit einem Drehkörper Kegel 1° aus Titan mit einem Durchmesser von 35 mm und einer Scherrate von 5,0 1/s.

3. Tränkharz nach Anspruch 1, **dadurch gekennzeichnet, dass** das Tränkharz ein Epoxidharzgemisch umfasst, das seinerseits ein erstes Epoxidharz E 1 mit einem Ø EEW von < 200 gNal, insbesondere einen Ø EEW von 50 bis < 200 g/ Val, und mindestens ein weiteres, von dem ersten Epoxidharz E1 verschiedenes Epoxidharz E2 mit einem Ø EEW von < 400 g/ Val umfasst.

4. Tränkharz nach mindestens einem der vorgenannten Ansprüche, **dadurch gekennzeichnet, dass** das Epoxidharzgemisch das erste Epoxidharz E1 und das weitere Epoxidharz E2 in einem Gewichtsverhältnis E1 : E2 umfasst, das einem Verhältnis im Bereich von 4,9 : 1 bis 1 : 4,9 entspricht.

5. Tränkharz nach Anspruch 1 oder 2, **dadurch gekennzeichnet, dass** das Epoxidharzgemisch neben dem ersten Epoxidharz E1 und dem weiteren Epoxidharz E2 ein drittes Epoxidharz E3 umfasst, das von dem ersten und dem weiteren Epoxidharz E1 und E2 verschieden ist, und diese Epoxidharze E1, E2 und E3 derart gewählt und/oder gemischt werden, dass das Tränkharz vor der Härtung einen Ø $EEW_{Mischung}$ im Bereich von 50 bis < 200 g/ Val und eine Viskosität im Bereich von 5 bis 70 Pa*s aufweist, gemessen an einem HAAKE RheoStress 1 Viskosimeter mit einem Drehkörper Kegel 1° aus Titan mit einem Durchmesser von 35 mm und einer Scherrate von 5,0 1/s.

6. Tränkharz nach mindestens einem der vorgenannten Ansprüche, **dadurch gekennzeichnet, dass** das dritte Epoxidharz E3 einen Ø EEW von < 400 g/ Val aufweist.

7. Tränkharz nach mindestens einem der vorgenannten Ansprüche, **dadurch gekennzeichnet, dass** das Epoxidharzgemisch das erste Epoxidharz E1, das weitere Epoxidharz E2 und ein drittes Epoxidharz E3 in einem Gewichtsverhältnis E3 : (E2 + E1) umfasst, das einem Verhältnis im Bereich von 1 : 5 bis 1 : 20 entspricht.

8. Tränkharz nach mindestens einem der vorgenannten Ansprüche, **dadurch gekennzeichnet, dass** der latente Härter H ausgewählt wird aus der Gruppe der Guanidine, Cyanoguanidine, Nitroguanidine oder Salzen hiervon oder Mischungen hiervon.

9. Tränkharz nach mindestens einem der vorgenannten Ansprüche, **dadurch gekennzeichnet, dass** der latente Härtungsbeschleuniger B ausgewählt wird aus der Gruppe Harnstoffe, Imidazole oder Salzen hiervon oder Mischungen hiervon.

10. Tränkharz nach mindestens einem der vorgenannten Ansprüche, **dadurch gekennzeichnet, dass** die Art und Menge des Härtungsbeschleunigers derart gewählt wird, dass das Tränkharz einen Härtungstemperaturbereich von 60 bis 100 °C, insbesondere von 60 bis 90 °C, insbesondere von 60 bis 80 °C, aufweist.

11. Tränkharz nach mindestens einem der vorgenannten Ansprüche, **dadurch gekennzeichnet, dass** die Art und Menge des Härtungsbeschleunigers derart gewählt wird, dass das Tränkharz einen Härtungszeitbereich von 1 bis 4 h, insbesondere von 1 bis 3 h, insbesondere von 1 bis 2 h, aufweist.

12. Tränkharz nach mindestens einem der vorgenannten Ansprüche, **dadurch gekennzeichnet, dass** das Tränkharz weiterhin eine Reaktivkomponente aus der Gruppe der Glycidylether umfasst oder/und
Dass das Tränkharz lösemittelfrei oder lösungsvermittlerfrei ist.

13. Reparatur- und/oder Auskleidungsschlauch für wasserführende Zu- und Ablaufkanäle umfassend ein Tränkharz nach mindestens einem der vorgenannten Ansprüche und ein Trägermaterial für das Tränkharz.

**14.** Reparatur- und/oder Auskleidungsschlauch nach Anspruch 13, **dadurch gekennzeichnet, dass** der Reparatur- und/oder Auskleidungsschlauch einen Tränkharzanteil von 40 bis 85 Gew.-%, bezogen auf das Gesamtgewicht des Reparatur-und/oder Auskleidungsschlauch, aufweist.

**15.** Verwendung eines Tränkharzes nach Anspruch 1 bis 12 zur Imprägnierung eines Reparatur- oder Auskleidungsschlauches für wasserführende Zu- und Ablaufkanäle.

**Claims**

**1.** Impregnating resin based on curable epoxy resins for impregnating repair and/or lining hoses for water-carrying supply and drainage channels, comprising

a) an epoxy resin mixture comprising a first curable epoxy resin E1 and at least one other curable epoxy resin E2 that is different from the first epoxy resin E1, and
b) a latent curing system comprising at least one curing agent H for curing the epoxy resins and at least one curing accelerator B, for accelerating the curing by means of the curing agent H,

wherein the impregnating resin has an average Ø $EEW_{mixture}$ in the range of from 50 to < 200 g/val and a viscosity in the range of from 5 to 70 Pa*s at 25 °C before curing, measured on a HAAKE RheoStress 1 viscometer with a 1° rotary cone made of titanium with a diameter of 35 mm and a shear rate of 5.0 1/s.

**2.** Impregnating resin according to claim 1, **characterised in that** the impregnating resin has an average Ø $EEW_{mixture}$ in the range of from 50 to < 200 g/val and a viscosity in the range of from 5 to 70 Pa*s at 25 °C and a viscosity in the range of from > 0.5 to 45 Pa*s at 60 °C before curing, measured on a HAAKE RheoStress 1 viscometer with a 1° rotary cone made of titanium with a diameter of 35 mm and a shear rate of 5.0 1/s.

**3.** Impregnating resin according to claim 1, **characterised in that** the impregnating resin comprises an epoxy resin mixture, which in turn comprises a first epoxy resin E1 having an average Ø EEW of < 200 g/val, in particular an average Ø EEW of 50 to < 200 g/val, and at least one further epoxy resin E2 that is different from the first epoxy resin E1 having an average Ø EEW of < 400 g/val.

**4.** Impregnating resin according to at least one of the preceding claims, **characterised in that** the epoxy resin mixture comprises the first epoxy resin E1 and the further epoxy resin E2 in a weight ratio E1:E2, which corresponds to a ratio in the range of from 4.9:1 to 1:4.9.

**5.** Impregnating resin according to either claim 1 or claim 2, **characterised in that** the epoxy resin mixture comprises, in addition to the first epoxy resin E1 and the further epoxy resin E2, a third epoxy resin E3 that is different from the first epoxy resin E1 and the further epoxy resin E2, and said epoxy resins E1, E2 and E3 are selected and/or mixed such that the impregnating resin has an average Ø $EEW_{mixture}$ in the range of from 50 to < 200 g/val and a viscosity in the range of from 5 to 70 Pa*s before curing, measured on a HAAKE RheoStress 1 viscometer with a 1° rotary cone made of titanium with a diameter of 35 mm and a shear rate of 5.0 1/s.

**6.** Impregnating resin according to at least one of the preceding claims, **characterised in that** the third epoxy resin E3 has an average Ø EEW of < 400 g/val.

**7.** Impregnating resin according to at least one of the preceding claims, **characterised in that** the epoxy resin mixture comprises the first epoxy resin E1, the further epoxy resin E2 and a third epoxy resin E3 in a weight ratio E3:(E2 + E1), which corresponds to a ratio in the range of from 1:5 to 1:20.

**8.** Impregnating resin according to at least one of the preceding claims, **characterised in that** the latent curing agent H is selected from the group of guanidines, cyanoguanidines, nitroguanidines or salts thereof or mixtures thereof.

**9.** Impregnating resin according to at least one of the preceding claims, **characterised in that** the latent curing accelerator B is selected from the group ureas, imidazoles or salts thereof or mixtures thereof.

**10.** Impregnating resin according to at least one of the preceding claims, **characterised in that** the type and amount of the curing accelerator is selected such that the impregnating resin has a curing temperature range of from 60 to

100 °C, in particular from 60 to 90 °C, in particular from 60 to 80 °C.

**11.** Impregnating resin according to at least one of the preceding claims, **characterised in that** the type and amount of the curing accelerator is selected such that the impregnating resin has a curing time range of from 1 to 4 hours, in particular from 1 to 3 hours, in particular from 1 to 2 hours.

**12.** Impregnating resin according to at least one of the preceding claims, **characterised in that** the impregnating resin further comprises a reactive component from the group of glycidyl ethers and/or **in that** the impregnating resin is solvent-free or solubiliser-free.

**13.** Repair and/or lining hose for water-carrying supply and drainage channels, comprising an impregnating resin according to at least one of the preceding claims and a carrier material for the impregnating resin.

**14.** Repair and/or lining hose according to claim 13, **characterised in that** the repair and/or lining hose has an impregnating resin content of 40 to 85 wt.%, based on the total weight of the repair and/or lining hose.

**15.** Use of an impregnating resin according to claims 1 to 12 for impregnating a repair or lining hose for water-carrying supply and drainage channels.

## Revendications

**1.** Résine d'imprégnation à base de résines époxydes durcissables servant à imprégner des tuyaux flexibles de réparation et/ou d'habillage pour des conduits d'arrivée et d'évacuation acheminant de l'eau, comprenant

a) un mélange de résines époxydes comprenant une première résine époxyde E1 durcissable et au moins une autre résine époxyde E2 durcissable différente de la première résine époxyde E1, et
b) un système de durcissement latent comprenant au moins un durcisseur H servant à faire durcir les résines époxydes et au moins un accélérateur de durcissement B, servant à accélérer le durcissement au moyen du durcisseur H,

dans laquelle la résine d'imprégnation présente avant le durcissement un Ø $EEW_{mélange}$ dans la plage de 50 à < 200 g/ Val et une viscosité dans la plage de 5 à 70 Pa*s à 25 °C, mesurée sur un viscosimètre HAAKE RheoStress 1 avec un corps de rotation Kegel 1° en titane avec un diamètre de 35 mm et un taux de cisaillement de 5,0 1/s.

**2.** Résine d'imprégnation selon la revendication 1, **caractérisée en ce que** la résine d'imprégnation présente avant le durcissement un Ø $EEW_{mélange}$ dans la plage de 50 à < 200 g/ Val et une viscosité dans la plage de 5 à 70 Pa*s à 25 °C et une viscosité dans la plage > 0,5 à 45 Pa*s à 60 °C, mesurée sur un viscosimètre HAAKE RheoStress 1 avec un corps de rotation Kegel 1° en titane avec un diamètre de 35 mm et un taux de cisaillement de 5,0 1/s.

**3.** Résine d'imprégnation selon la revendication 1, **caractérisée en ce que** la résine d'imprégnation comprend un mélange de résines époxydes, qui comprend quant à lui une première résine époxyde E1 avec un Ø EEW < 200 gNal, en particulier un Ø EEW de 50 à < 200 g/ Val, et au moins une autre résine époxyde E2 différente de la première résine époxyde E1 avec un Ø EEW < 400 g/ Val.

**4.** Résine d'imprégnation selon au moins l'une quelconque des revendications précédentes, **caractérisée en ce que** le mélange de résines époxydes comprend la première résine époxyde E1 et l'autre résine époxyde E2 selon un rapport de poids E1:E2, qui correspond à un rapport dans la plage de 4,9:1 à 1:4,9.

**5.** Résine d'imprégnation selon la revendication 1 ou 2, **caractérisée en ce que** le mélange de résines époxydes comprend, outre la première résine époxyde E1 et l'autre résine époxyde E2, une troisième résine époxyde E3, qui est différente de la première et de l'autre résine époxyde E1 et E2, et lesdites résines époxydes E1, E2 et E3 sont choisies et/ou mélangées de telle manière que la résine d'imprégnation présente avant le durcissement un Ø $EEW_{mélange}$ dans la plage de 50 à < 200 g/ Val et une viscosité dans la plage de 5 à 70 Pa*s, mesurée sur un viscosimètre HAAKE RheoStress 1 avec un corps de rotation Kegel 1° en titane avec un diamètre de 35 mm et un taux de cisaillement de 5,0 1/s.

**6.** Résine d'imprégnation selon au moins l'une quelconque des revendications précédentes, **caractérisée en ce que**

la troisième résine époxyde E3 présente un Ø EEW < 400 g/ Val.

7. Résine d'imprégnation selon au moins l'une quelconque des revendications précédentes, **caractérisée en ce que** le mélange de résines époxydes comprend la première résine époxyde E1, l'autre résine époxyde E2 et une troisième résine époxyde E3 selon un rapport de poids E3:(E2 + E1), qui correspond à un rapport dans la plage de 1:5 à 1:20.

8. Résine d'imprégnation selon au moins l'une quelconque des revendications précédentes, **caractérisée en ce que** le durcisseur H latent est choisi parmi le groupe des guanidines, cyanoguanidines, nitroguanidines ou des sels de celles-ci ou des mélanges de celles-ci.

9. Résine d'imprégnation selon au moins l'une quelconque des revendications précédentes, **caractérisée en ce que** l'accélérateur de durcissement B latent est choisi parmi le groupe des urées, imidazoles ou des sels de ceux-ci ou des mélanges de ceux-ci.

10. Résine d'imprégnation selon au moins l'une quelconque des revendications précédentes, **caractérisée en ce que** le type et la quantité de l'accélérateur de durcissement sont choisis de telle manière que la résine d'imprégnation présente une plage de températures de durcissement de 60 à 100 °C, en particulier de 60 à 90 °C, en particulier de 60 à 80 °C.

11. Résine d'imprégnation selon au moins l'une quelconque des revendications précédentes, **caractérisée en ce que** le type et la quantité de l'accélérateur de durcissement sont choisis de telle manière que la résine d'imprégnation présente une plage de temps de durcissement de 1 à 4 h, en particulier de 1 à 3 h, en particulier de 1 à 2 h.

12. Résine d'imprégnation selon au moins l'une quelconque des revendications précédentes, **caractérisée en ce que** la résine d'imprégnation comprend par ailleurs un composant réactif issu du groupe des éthers de glycidyle, et/ou **en ce que** la résine d'imprégnation est sans solvant ou sans agent de solubilisation.

13. Tuyau flexible de réparation et/ou d'habillage pour des canaux d'arrivée et d'évacuation acheminant de l'eau comprenant une résine d'imprégnation selon au moins l'une quelconque des revendications précédentes et un matériau de support pour la résine d'imprégnation.

14. Tuyau flexible de réparation et/ou d'habillage selon la revendication 13, **caractérisé en ce que** le tuyau flexible de réparation et/ou d'habillage présente une fraction de résine d'imprégnation de 40 à 85 % en poids, par rapport au poids total du tuyau flexible de réparation et/ou d'habillage.

15. Utilisation d'une résine d'imprégnation selon la revendication 1 à 12 servant à imprégner un tuyau flexible de réparation et/ou d'habillage pour des canaux d'arrivée et d'évacuation acheminant de l'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1087865 B1
- WO 0315131 A1
- WO 2006061129 A1
- US 5017258 A
- WO 2013124244 A1
- WO 2013037670 A1